# EUROPÄISCHE PATENTSCHRIFT

(11) **EP 3 414 044 B1**
(45) Veröffentlichungstag und Bekanntmachung des Hinweises auf die Patenterteilung: **01.04.2020**
(21) Anmeldenummer: 17704216.5
(22) Anmeldetag: 07.02.2017
(51) Int. Cl.: B23K 26/073, B22F 3/105, B29C 67/00, B23K 26/342, B23K 26/082, B41M 5/26

(54) **VERFAHREN ZUM HERSTELLEN MINDESTENS EINES TEILBEREICHS EINER SCHICHT EINES DREIDIMENSIONALEN BAUTEILS**
METHOD OF PRODUCING AT LEAST A SUB-REGION OF A LAYER OF A THREE-DIMENSIONAL COMPONENT
PROCÉDÉ DE PRODUCTION D'UNE PARTIE D'UNE COUCHE D'UN COMPOSANT TRIDIMENSIONNEL

(30) Priorität: 10.02.2016 WO PCT/EP2016/052772
(43) Veröffentlichungstag der Anmeldung: 19.12.2018
(73) Patentinhaber: Trumpf Laser- und Systemtechnik GmbH, 71254 Ditzingen (DE)
(72) Erfinder: WÜST, Frank Peter, 71083 Herrenberg (DE); KÖNIG, Thomas, 75233 Tiefenbronn-Mühlhausen (DE); BUCHBINDER, Damien, 12487 Berlin (DE); WAGNER, Joachim, 70176 Stuttgart (DE); BAUER, Johannes, 75428 Illingen (DE)
(74) Vertreter: Kohler Schmid Möbus Patentanwälte
(86) Internationale Anmeldenummer: PCT/EP2017/052636
(87) Internationale Veröffentlichungsnummer: WO 2017/137391

(56) Entgegenhaltungen:
- JP-A- H02 142 690
- JP-A- S63 224 889
- JP-A- 2002 144 061
- US-A- 5 155 324
- US-A1- 2012 267 345

## Beschreibung

Die vorliegende Erfindung betrifft ein Verfahren zum Herstellen mindestens eines Teilbereichs einer Schicht eines dreidimensionalen Bauteils durch Bestrahlen einer Pulverschicht mittels eines Hochenergiestrahls, insbesondere mittels eines Laserstrahles, gemäß dem Oberbegriff des Anspruchs 1 (siehe z.B. US 2013/267345 A1).

Dreidimensionale Bauteile können durch so genannte generative Fertigungsverfahren (auch als Additive-Manufacturing-Verfahren bezeichnet) hergestellt werden. Bei derartigen Verfahren wird das dreidimensionale Bauteil schichtweise bzw. lagenweise generiert. Beim so genannten selektiven Laserschmelzen (engl. "selective laser melting", auch: SLM) und beim so genannten selektiven Lasersintern (engl. "selective laser sintering", auch: SLS) wird zu diesem Zweck ein Pulverwerkstoff lokal durch einen Hochenergiestrahl, insbesondere einen Laserstrahl, aufgeschmolzen, um eine Lage des dreidimensionalen Bauteils zu erzeugen.

Die EP 2 596 901 A1 beschreibt eine als Hülle-Kern-Strategie bezeichnete Vorgehensweise, bei der das zu generierende Bauteil virtuell in einen Hüllenbereich und in einen Kernbereich aufgeteilt wird. Bei der Generierung des Bauteils wird zunächst der Hüllenbereich mit einem Hochenergiestrahl bestrahlt, der ein vergleichsweise schmales und/oder gaußförmiges Strahlprofil aufweist, während im Anschluss daran der Kernbereich mit einem Hochenergiestrahl bestrahlt wird, der ein vergleichsweise breites und/oder homogenes Strahlprofil aufweist, so dass der Kernbereich schneller aufgeschmolzen werden kann als der Hüllenbereich. Für die Realisierung der Hülle-Kern-Strategie sind mindestens zwei unterschiedliche Strahlprofile erforderlich.

In der EP 2 596 901 A1 ist eine optische Bestrahlungsvorrichtung für eine Anlage zur Herstellung von dreidimensionalen Werkstücken bekannt geworden, welche zur Erzeugung eines ersten und eines zweiten, von dem ersten verschiedenen Strahlprofils ausgebildet ist, um bei der Herstellung eines dreidimensionalen Bauteils die Hülle-Kern-Strategie zu realisieren. Die optische Bestrahlungsvorrichtung weist eine Umschaltvorrichtung auf, die den eintretenden Lichtstrahl in einem ersten Lichtleitzustand ohne eine Veränderung des Strahlprofils zu einem Ausgangsanschluss leitet und die den eintretenden Lichtstrahl in einem zweiten Lichtleitzustand mittels einer Multimoden-Lichtleitfaser zu dem Ausgangsanschluss leitet, um das zweite, vom ersten verschiedene Strahlprofil zu erzeugen. Bei dem ersten Strahlprofil handelt es sich typischer Weise um ein gaußförmiges Strahlprofil.

Aus der DE 199 53 000 A1 ist eine Vorrichtung zum schichtweisen Aufbau von Körpern bekannt geworden, bei der mehrere Strahlen zur schnellen Herstellung der Körper verwendet werden. Die schnelle Herstellung der Körper wird ähnlich wie in der EP 2 596 901 A1 dadurch erreicht, dass beim Sintern oder Verschweißen eines pulverförmigen Stoffes eine erste Strahlungsquelle zur Erzeugung von Konturen und eine zweite Strahlungsquelle zur schnellen Realisierung des Innenraums des zu erzeugenden Körpers verwendet werden. Die erste Strahlungsquelle soll zur Erzeugung der Konturen einen kleinen Fokus erzeugen. Die zweite Strahlungsquelle soll mehrere Schichten zwischen den erzeugten Konturen verschweißen oder versintern. Zu diesem Zweck kann die zweite Strahlungsquelle einen eindimensionalen Scanner zur Erzeugung eines Linienfokus aufweisen, der mittels einer XY-Positioniereinheit über den herzustellenden Körper bewegt wird. Bei einem anderen Ausführungsbeispiel ist die Strahlungsquelle zur Erzeugung einer flächenhaften Bestrahlung ausgebildet, wobei zwischen der zweiten Strahlungsquelle und dem Körper eine Maske angeordnet ist, die in ihrer Kontur veränderbar sein kann, um die Form der bestrahlten Fläche anzupassen.

Aus der DE 10 2013 003 063 T5 ist ein Verfahren zum Herstellen eines dreidimensionalen geformten Objekts bekannt geworden, bei dem durch Bestrahlen eines vorbestimmten Abschnitts einer Pulverschicht mit einem Lichtstrahl eine verfestigte Schicht erzeugt wird. In einem Beispiel ist ein anfänglicher Weg ein Weg entlang einer Kontur und nachfolgende Wege befinden sich innerhalb der Kontur, wobei jeder der nachfolgenden Wege an einen diesem vorangehenden Weg angrenzt, um das Material innerhalb der Pulverschicht zusammenzuschmelzen.

Aneinander angrenzende bzw. geringfügig seitlich überlappende Wege innerhalb der Kontur werden in der DE 10 2013 003 063 T5 typischer Weise in gegenläufiger Richtung mit dem Lichtstrahl bestrahlt. Hierbei tritt das Problem auf, dass das bestrahlte Pulvermaterial am Ende eines Weges heißer ist als das Pulvermaterial am Anfang eines nachfolgenden, angrenzenden Weges, der in gegenläufiger Richtung durchlaufen wird.

Ein weiteres Problem stellt gemäß der US4863538 die Tatsache dar, dass bei einem Verfahren zum selektiven Lasersintern, bei dem ein so genannter Raster-Scan zur Herstellung eines Bauteils verwendet wird, Bögen oder Linien, die nicht parallel zu den beiden Achsen des Rasters verlaufen, durch die Ränder der beleuchteten Fläche nur angenähert werden und somit nicht den Soll-Rändern entsprechen. Die Auflösung bei der Herstellung des Bauteils wird dadurch ggf. reduziert, wenn der Laserstrahl den Rand der Schicht des zu erzeugenden Bauteils bzw. den Rand der beleuchteten Fläche nicht in einem zusätzlichen Schritt im so genannten Vektormodus abfährt.

In der WO 2012/102655 A1 wird vorgeschlagen, den spezifischen Energieeintrag entlang eines Bestrahlungswegs zum Aufschmelzen einer Pulverschicht zu optimieren, indem beispielsweise die Geschwindigkeit des Strahls, die Leistung des Strahls oder ein Strahldurchmesser entlang des Bestrahlungswegs verändert werden. Für die Optimierung wird unter anderem eine Temperatur in der Pulverschicht entlang des Bestrahlungsweges berechnet, d.h. es erfolgt eine aufwändige Modellierung des Wärmeeintrags bzw. des Wärmeabflusses entlang des Bestrahlungsweges.

In der EP 1 568 472 A1 ist ein Verfahren zum Herstellen von Produkten beschrieben, die mittels eines hochenergetischen Strahls Schicht für Schicht aus einem Werkstoff aufgebaut werden. Der Strahl bestrahlt hierbei vorbestimmte Positionen einer Werkstoffschicht jeweils m-fach (m>1), wobei für jede dieser Positionen gilt, dass sie beim ersten Bestrahlen zunächst auf eine Temperatur unterhalb einer Schmelztemperatur des Werkstoffs erhitzt und beim m-ten Bestrahlen auf eine m-te Temperatur oberhalb dieser Schmelztemperatur erhitzt und dabei derart über die gesamte Schichtdicke hinweg aufgeschmolzen wird, dass sich der Werkstoff an dieser Position mit der darunter liegenden Schicht verbindet. Auch bei dem in der EP 1 568 472 A1 beschriebenen Verfahren besteht jedoch das Problem, dass sich in dem Material der Pulverschicht eine ungleichmäßige Temperaturverteilung einstellt.

### Aufgabe der Erfindung

Der Erfindung liegt die Aufgabe zugrunde, ein Verfahren zum Herstellen eines Teilbereichs einer Schicht eines dreidimensionalen Bauteils anzugeben, mit dem eine besonders effiziente Herstellung eines dreidimensionalen Bauteils möglich ist.

### Gegenstand der Erfindung

Die Erfindung betrifft ein Verfahren zum Herstellen mindestens eines Teilbereichs einer Schicht eines dreidimensionalen Bauteils durch Bestrahlen mindestens einer Pulverschicht mittels mindestens eines Hochenergiestrahls, insbesondere mittels mindestens eines Laserstrahles, siehe Anspruch 1, umfassend unter Anderen : Bestrahlen der Pulverschicht mittels des mindestens einen Hochenergiestrahls in einem Bearbeitungsfeld (einer Scannereinrichtung), wobei der mindestens eine Hochenergiestrahl mit einer kontinuierlichen oszillierenden Bewegung typischer Weise mehrfach in einer ersten Richtung über die Pulverschicht bewegt wird, um einen linienförmigen Bestrahlungsbereich zu erzeugen, an dem die mindestens eine Pulverschicht aufgeschmolzen wird, und wobei zur Erzeugung des Teilbereichs der Schicht des dreidimensionalen Bauteils der linienförmige Bestrahlungsbereich (gleichzeitig) in einer zweiten, von der ersten verschiedenen Richtung über die Pulverschicht bewegt wird.

Bei diesem Aspekt der Erfindung wird vorgeschlagen, mindestens einen Hochenergiestrahl, der in der Regel ein im Wesentlichen rundes bzw. punktförmiges Strahlprofil aufweist, in einer oszillierenden, typischer Weise hochfrequenten Bewegung ("Wobbeln") mehrfach, d.h. mit mindestens zwei, typischer Weise drei oder mehr vollständigen Oszillationen bzw. Schwingungsperioden der oszillierenden Bewegung in einer ersten Richtung über die Pulverschicht zu bewegen, um auf diese Weise einen linienförmigen Bestrahlungsbereich bzw. eine quasistationäre Linie zu erzeugen, entlang derer das Material der Pulverschicht aufgeschmolzen wird.

Die Bewegung in den beiden Richtungen wird gemäß der Erfindung derart aufeinander abgestimmt, dass jede Stelle innerhalb des linienförmigen Bestrahlungsbereichs (ggf. bis auf die Stellen an den seitlichen Rändern des Bestrahlungsbereichs) mehrfach, d.h. mindestens zwei Mal, bevorzugt mindestens drei Mal, von dem Laserstrahl, genauer gesagt von dessen Strahlprofil, überstrichen wird. Zwei bei unmittelbar aufeinander folgenden Oszillationen der oszillierenden Bewegung von dem Hochenergiestrahl überstrichene Bereiche der Pulverschicht überlappen sich in der Regel um ca. 50 % oder mehr. Die (kontinuierliche) oszillierende Bewegung in der ersten Richtung wird mit einer Bewegung in einer zweiten Richtung (Vorschubrichtung) überlagert, so dass ein "Linienfokus" entsteht, der über die Pulverschicht bewegt wird, um auf diese Weise mindestens einen Teilbereich der Schicht des dreidimensionalen Bauteils oder ggf. die gesamte Schicht des dreidimensionalen Bauteils herzustellen.

Sowohl die oszillierende Bewegung des Hochenergiestrahls in der ersten Richtung als auch die Bewegung des linienförmigen Bestrahlungsbereichs über die Pulverschicht erfolgen bevorzugt durch einen zweidimensionalen Scanner bzw. eine Scannereinrichtung, die typischer Weise zwei Scannerspiegel aufweist, um den Hochenergiestrahl in dem Bearbeitungsfeld zu bewegen. Die Scannerspiegel ermöglichen hierbei insbesondere eine hochdynamische oszillierende Bewegung des Hochenergiestrahls. Das dreidimensionale Bauteil wird hierbei bevorzugt durch selektives Laserschmelzen oder durch selektives Lasersintern schichtweise hergestellt.

Bevorzugt wird mindestens eine Pulverschicht mittels des mindestens einen Hochenergiestrahls, bevorzugt mittels des mindestens einen Laserstrahls, in einer Bearbeitungskammer einer Bearbeitungsmaschine bestrahlt, die zur Herstellung von dreidimensionalen Bauteilen durch Bestrahlen von Pulverschichten ausgebildet ist. Die Bearbeitungskammer weist einen Träger zum Aufbringen der Pulverschichten auf. Die Bearbeitungsmaschine kann insbesondere wie weiter oben beschrieben ausgebildet sein.

Gegenüber den in der Beschreibungseinleitung beschriebenen Verfahren, bei denen benachbarte Wege in gegenläufiger Richtung durchlaufen werden, wobei es zu einem unterschiedlich starken Wärmeeintrag in das Pulvermaterial kommt, kann durch die schnelle bzw. hochfrequente oszillierende Bewegung die Wärme wesentlich gleichmäßiger entlang der Linie bzw. entlang des linienförmigen Bestrahlungsbereichs in das Pulvermaterial eingebracht werden, da ein- und dieselbe Stelle mehrfach, in der Regel vielfach, von dem mindestens einen Hochenergiestrahl überfahren wird. Mit anderen Worten ist der Wärmeabfluss klein im Vergleich zur (hohen) Scangeschwindigkeit des Hochenergiestrahls.

Das mehrfache Überfahren ein- und derselben Stelle bzw. der Überlapp zwischen zwei oder mehr unmittelbar aufeinander folgenden oszillierenden Bewegungen führt dazu, dass die Enden der oszillierenden Bewegung bzw. des linienartigen Bestrahlungsbereichs, die bevorzugt einen Randabschnitt einer zu beleuchtenden Fläche bzw. des herzustellenden Teilbereichs der Schicht bilden, führt dazu, dass der Randabschnitt der beleuchteten Fläche durch ein sehr viel feineres Raster als in der US 4863538 gebildet werden kann, so dass die Ist-Ränder der zweidimensional beleuchteten Fläche bzw. des Teilbereichs der Schicht den Soll-Rändern sehr gut entsprechen. Dadurch kann die Notwendigkeit entfallen, mit dem Laserstrahl den Rand der Kontur im Vektormodus in einem zusätzlichen Schritt abzufahren. Dieser Vorteil liegt bereits bei Scangeschwindigkeiten bzw. Scanfrequenzen vor, die denen einer üblichen Rasterung entsprechen. Vorteilhafterweise kann die Scangeschwindigkeit bzw. die Scanfrequenz der oszillierenden Bewegung erhöht werden, beispielsweise auf 0,5 kHz oder mehr, z.B. auf 5 kHz. In der Regel können die beiden Scannerspiegel der Scannereinrichtung ebenfalls jeweils eine oszillierende Bewegung mit mindestens einer Frequenz von 0,5 kHz, bspw. 1 kHz oder mehr, ausführen.

Bei einer Variante werden zum Erzeugen des linienförmigen Bestrahlungsbereichs mindestens zwei Hochenergiestrahlen mit einer oszillierenden Bewegung in der ersten Richtung über die Pulverschicht bewegt. Die Verwendung von zwei oder mehr Hochenergiestrahlen ermöglicht es, die Effizienz des Schmelzprozesses zu steigern, da die Größe des Schmelzbades erhöht werden kann und/oder mehr Laserleistung in die Wechselwirkungszone bzw. in den linienförmigen Bestrahlungsbereich einzubringen.

Zwei oder mehr Hochenergiestrahlen können dazu dienen, mit einer oszillierenden Bewegung den linienförmigen Bestrahlungsbereich in seiner gesamten Länge zu überstreichen. Gegebenenfalls kann ein jeweiliger Hochenergiestrahl nur einen Abschnitt des linienförmigen Bestrahlungsbereichs mit einer oszillierenden Bewegung überstreichen. Mit anderen Worten kann die (doppelte) Amplitude der oszillierenden Bewegung eines einzelnen Hochenergiestrahls der gesamten Länge des linienförmigen Bestrahlungsbereichs entsprechen oder ggf. lediglich einen Teil der Länge des linienförmigen Bestrahlungsbereichs ausmachen.

In bestimmten Teilbereichen der Pulverschicht kann zur Erzeugung der Schicht des dreidimensionalen Bauteils die Länge des linienförmigen Bestrahlungsbereichs ggf. auf eine punktförmige Bestrahlung (z.B. mit einem Strahldurchmesser von weniger als 1 mm, z.B. 0,1 mm) reduziert werden, beispielsweise wenn eine Konturlinie des dreidimensionalen Bauteils erzeugt werden soll. Da die Geometrie der zu beleuchtenden Fläche der Pulverschicht von der Art bzw. der Geometrie des zu fertigenden dreidimensionalen Bauteils abhängig ist, können bei der Verwendung von zwei oder mehr Hochenergiestrahlen, die unabhängig voneinander in dem Bearbeitungsfeld bewegt werden, jeweils einzeln unterschiedliche Teilbereiche der Pulverschicht bestrahlt werden, oder zwei oder mehr der Hochenergiestrahlen können auf die oben beschriebene Weise gemeinsam einen hochdynamischen, typischer Weise drehbaren quasistationären linienförmigen Bestrahlungsbereich bilden. Insbesondere bei der Verwendung von mehreren Hochenergiestrahlen ermöglicht das Verfahren somit eine hohe Flexibilität hinsichtlich der Detailgenauigkeit und der Aufbaurate des dreidimensionalen Bauteils.

Die Hochenergiestrahlen, die auf das Bearbeitungsfeld treffen, können beispielsweise mit Hilfe eines oder mehrerer diffraktiver optischer Elemente aus einem einzelnen Hochenergiestrahl erzeugt werden. Auch kann eine Scannereinrichtung verwendet werden, die zwei oder mehr zweidimensionale Scanner aufweist, um einen jeweiligen Hochenergiestrahl auf die Pulverschicht auszurichten, der unabhängig von dem bzw. den anderen Hochenergiestrahlen entlang der Pulverschicht bewegt werden kann. Die Hochenergiestrahlen können von mehreren Strahlquellen erzeugt werden, es ist aber auch möglich, eine einzige Strahlquelle zu verwenden, deren Leistung auf mehrere Hochenergiestrahlen aufgeteilt wird.

Für die Erzeugung des linienförmigen Bestrahlungsbereichs mit Hilfe von mehreren Hochenergiestrahlen können unterschiedliche Strategien eingesetzt werden, um einen gewünschten Einfluss auf die Schmelzstabilität bzw. auf die Schmelzhomogenität zu nehmen. Durch die Wahl einer geeigneten Strategie bei der Erzeugung des linienförmigen Bestrahlungsbereichs kann auch die Effizienz bzw. die Aufbaurate des dreidimensionalen Bauteils gesteigert werden. Beispielsweise können je nach gewählter Strategie die Abschnitte des linienförmigen Bestrahlungsbereichs, die von der oszillierenden Bewegung eines jeweiligen Hochenergiestrahls überstrichen werden, aneinander angrenzen oder sich ganz oder teilweise überlappen. Auch kann die Amplitude der oszillierenden Bewegung von unterschiedlichen Hochenergiestrahlen und somit die Länge eines jeweiligen Abschnitts gleich groß oder unterschiedlich gewählt werden. Die oszillierende Bewegung von zwei oder mehr Hochenergiestrahlen kann eine feste Phasenbeziehung aufweisen, beispielsweise können zwei Hochenergiestrahlen die oszillierende Bewegung in der ersten Richtung gegenläufig oder gleichsinnig ausführen. Hierdurch kann beispielsweise ein unterschiedlicher Drehsinn der oszillierenden Bewegungen unterschiedlicher Hochenergiestrahlen erzeugt werden.

Bei einer weiteren Variante wird/werden die erste Richtung und/oder die zweite Richtung bei der Bewegung des linienförmigen Bestrahlungsbereichs über die Pulverschicht verändert. Insbesondere kann ein Winkel zwischen der ersten Richtung, in welcher der linienförmige Bestrahlungsbereich verläuft, und der zweiten Richtung, d.h. der Vorschubrichtung, bei der Bewegung über die Pulverschicht variiert werden. Eine solche Veränderung der beiden Richtungen während der Bestrahlung lässt sich auf besonders einfache Weise mit Hilfe einer Scannereinrichtung realisieren, die mindestens einen zweidimensionalen Scanner mit zwei hochdynamisch drehbaren bzw. verkippbaren Scannerspiegeln aufweist. Durch eine in geeigneter Weise synchronisierte Drehung der Scannerspiegel um die beiden Drehachsen lassen sich die Richtung des linienförmigen Bestrahlungsbereichs auf dem Bearbeitungsfeld und auch die Vorschubrichtung praktisch frei wählen.

In einer weiteren Variante wird eine Länge des linienförmigen Bestrahlungsbereichs entlang der ersten Richtung bei der Bewegung des linienförmigen Bestrahlungsbereichs über die Pulverschicht verändert. Zusätzlich oder alternativ zur Veränderung der Ausrichtung der ersten und zweiten Richtung in dem Bearbeitungsfeld kann bei der Verwendung einer Scannereinrichtung mit mindestens einem zweidimensionalen Scanner auch die Länge des linienförmigen Bestrahlungsbereichs über einen vergleichsweise großen Wertebereich praktisch beliebig verändert werden, wobei die maximale Länge des linienförmigen Bestrahlungsbereichs durch die maximale Auslenkung der Scannerspiegel limitiert ist und mehrere Millimeter, beispielsweise ca. 5 mm, betragen kann, in der Regel aber eine maximale Länge von ca. 1 cm nicht überschreitet.

In einer Variante wird eine (mittlere) Geschwindigkeit des Hochenergiestrahls bei der oszillierenden Bewegung in der ersten Richtung mindestens zehn Mal so groß gewählt wie eine Geschwindigkeit des Hochenergiestrahls bei der Bewegung des linienförmigen Bestrahlungsbereichs in der zweiten Richtung. Wie weiter oben beschrieben wurde, liegt die (ggf. variierende) Frequenz der oszillierenden Bewegung in der Regel bei mehr als ca. 0,5 kHz, was zu einer über die Schwingungsperiode gemittelten Geschwindigkeit von typischer Weise mehr als ca. 0,05 m/s führt. Die Geschwindigkeit der Vorschubbewegung liegt typischer Weise bei ca. 10 % oder weniger, ggf. bei weniger als 5 % oder bei weniger als 0,5 % der Geschwindigkeit der oszillierenden Bewegung.

Die Vorschubgeschwindigkeit in der zweiten Richtung hängt typischer Weise von der Länge des linienförmigen Bestrahlungsbereichs ab: Nimmt die Länge des linienförmigen Bestrahlungsbereichs zu, nimmt bevorzugt die Vorschubgeschwindigkeit ab, und umgekehrt. Dies hat folgenden Grund: Bei gleichbleibender Geschwindigkeit in der ersten Richtung wird eine längere Zeitdauer benötigt, um einen linienförmigen Bestrahlungsbereich mit einer großen Länge zu überfahren als einen linienförmigen Bestrahlungsbereich mit einer kleinen Länge. Eine Anpassung der Vorschubgeschwindigkeit ist daher vorteilhaft, um einen möglichst konstanten Energieeintrag in die Pulverschicht zu erzeugen, wenn die Leistung des Hochenergiestrahls konstant, z.B. auf einer maximalen Leistung, gehalten werden soll. Es versteht sich, dass die Vorschubgeschwindigkeit unter anderem auch vom ggf. in seiner Größe einstellbaren Durchmesser des Hochenergiestrahls auf der Pulverschicht abhängig ist; wobei größere Durchmesser des Hochenergiestrahls in der Regel größere Vorschubgeschwindigkeiten ermöglichen, und umgekehrt.

Werden die erste Richtung und/oder die zweite Richtung bei der Bewegung des linienförmigen Bestrahlungsbereichs über die Pulverschicht verändert, insbesondere bei einer Kurvenfahrt, so ist es in der Regel erforderlich, die Laserleistung abhängig von der Position entlang des linienförmigen Bestrahlungsbereichs derart anzupassen, dass der flächige Energieeintrag des Hochenergiestrahls in die Pulverschicht an jedem Ort im Wesentlichen gleich groß ist. Zu diesem Zweck ist es erforderlich, die Prozessparameter, insbesondere die Laserleistung und die Scangeschwindigkeit(en), geeignet anzupassen, was zu einem erheblichen steuerungstechnischen Aufwand führen kann.

Um diesen Aufwand zu vermeiden, kann es günstig sein, die Schicht des herzustellenden dreidimensionalen Bauteils in mehrere streifenförmige Teilbereiche einzuteilen, deren Breite - sofern diese nicht an die Randkontur der herzustellenden Schicht angrenzen - typischerweise der maximal einstellbaren Länge des linienförmigen Bestrahlungsbereichs entspricht. Die streifenförmigen Teilbereiche können nacheinander mittels des Hochenergiestrahls bestrahlt werden, um die Schicht des dreidimensionalen Bauteils zu erzeugen. An Stelle von streifenförmigen Teilbereichen kann die herzustellende Schicht auch in rechteckige oder in quadratische Teilbereiche eingeteilt werden, beispielsweise in der Art von Schachbrettfeldern. Die (quadratischen) Teilbereiche können in diesem Fall ebenfalls nacheinander (d.h. Schachbrettfeld für Schachbrettfeld) mit dem Hochenergiestrahl bestrahlt werden, um die Schicht des dreidimensionalen Bauteils zu erzeugen. Die Breite der (quadratischen) Teilbereiche entspricht dabei üblicherweise weniger als zehn Mal der Länge des linienförmigen Bestrahlungsbereichs bzw. weniger als zehn Mal der (doppelten) Amplitude der oszillierenden Bewegung in der ersten Richtung.

Auch bei der Bestrahlung der Pulverschicht mit einem linienförmigen Bestrahlungsbereich, dessen Richtung sich bei der Herstellung des Teilbereichs der Schicht nicht verändert, ist die durchschnittliche Energie pro Fläche (Energiedichte) bei der oszillierenden Bewegung in der Regel nicht homogen über die Länge des linienförmigen Bestrahlungsbereichs verteilt, was aber für die Durchführung des Prozesses vorteilhaft wäre.

Bei einer Variante des Verfahrens wird der Hochenergiestrahl bei der kontinuierlichen oszillierenden Bewegung in der ersten Richtung mit konstanter Geschwindigkeit über die Pulverschicht bewegt, d.h. die Scanner-Bewegung in der ersten Richtung erfolgt mit konstanter Geschwindigkeit. Bevorzugt ist in diesem Fall auch die Geschwindigkeit der Bewegung in der zweiten, bevorzugt senkrecht zur ersten verlaufenden Richtung konstant. Auf diese Weise ergibt sich insgesamt eine zickzackförmige Bahnbewegung des Hochenergiestrahls auf der Pulverschicht. Da jede Position der oszillierenden Bewegung in der ersten Richtung (außer die Umkehrpunkte) zweimal mit der gleichen Geschwindigkeit überstrichen wird, kann an jeder Position entlang der ersten Richtung bei der oszillierenden Bewegung immer die gleiche Energiedichte eingebracht werden.

Bei einer weiteren Variante wird eine Leistung des Hochenergiestrahls an den beiden Umkehrpunkten der kontinuierlichen oszillierenden Bewegung gegenüber einer Leistung des Hochenergiestrahls zwischen den beiden Umkehrpunkten der kontinuierlichen oszillierenden Bewegung reduziert. Bei einer realen Bearbeitungsmaschine ist die Beschleunigung in einem jeweiligen Umkehrpunkt endlich, so dass der Hochenergiestrahl länger als erwünscht an den Umkehrpunkten der oszillierenden Bewegung verweilt und es dadurch am Rand der oszillierenden Bewegung zu einer unerwünschten erhöhten Aufheizung der Pulverschicht kommt. Dieses Problem kann gelöst werden, indem der Energieeintrag durch die höhere Verweildauer an den Umkehrpunkten durch eine Absenkung der Energie bzw. der Leistung des Hochenergiestrahls an den Umkehrpunkten zumindest teilweise kompensiert wird. Die Leistung an den Umkehrpunkten kann hierbei auf weniger als 40 %, weniger als 30 % oder weniger als 20 % der Leistung zwischen den Umkehrpunkten abgesenkt werden.

Selbst bei einer idealen zickzackförmigen Bahnbewegung, d.h. bei konstanter Scangeschwindigkeit und damit in der ersten Richtung im Mittel homogen verteilter Energie, kann es ggf. zu einem in der zweiten Richtung (d.h. in Vorschubrichtung) inhomogenen Energieeintrag kommen: Weist der Hochenergiestrahl beispielsweise ein im Vergleich zum Vorschub bzw. zur Vorschubgeschwindigkeit pro oszillierender Bewegung schmales gaußförmiges Strahlprofil auf, wird ggf. in Bereichen, die in der zweiten Richtung zwischen benachbarten Umkehrpunkten liegen, weniger Energie eingetragen als an den Umkehrpunkten, während der Energieeintrag mittig zwischen den Umkehrpunkten der oszillierenden Bewegung wesentlich homogener ist. Dies führt ggf. dazu, dass an den Umkehrpunkten das Pulvermaterial weiter über die Schmelztemperatur erhitzt wird als notwendig, was zu einem unruhigeren Prozess führt.

Dieses Problem kann auf die weiter oben beschriebene Weise gelöst werden, d.h. durch eine hohe Geschwindigkeit der oszillierenden Bewegung in der ersten Richtung im Vergleich zur Geschwindigkeit in der zweiten Richtung (Vorschubrichtung), d.h. indem die Bewegung des Hochenergiestrahls in den beiden Richtungen, genauer gesagt die Geschwindigkeiten des Hochenergiestrahls in den beiden Richtungen, derart aufeinander abgestimmt wird / werden, dass jede Stelle innerhalb des linienförmigen Bestrahlungsbereichs mindestens zwei Mal, bevorzugt mindestens drei Mal, von dem Hochenergiestrahl überstrichen wird. Dieses Vorgehen wird allerdings durch die maximal erreichbare Geschwindigkeit der Scanner-Bewegung limitiert, so dass für die Erzeugung eines möglichst homogenen Energieeintrags pro Fläche ggf. die Aufbaurate des dreidimensionalen Werkstücks reduziert werden muss.

In einer Variante ist der kontinuierlichen oszillierenden Bewegung in der ersten Richtung eine weitere kontinuierliche oszillierende Bewegung in der zweiten, von der ersten verschiedenen, insbesondere zur ersten senkrechten Richtung überlagert. Die weitere kontinuierliche oszillierende Bewegung führt dazu, dass der Hochenergiestrahl beim Bestrahlen der Pulverschicht eine Bahnkurve z.B. in Form einer Spiralbahn abfährt. Die Amplitude der weiteren oszillierenden Bewegung ist in der Regel deutlich geringer als die Amplitude der oszillierenden Bewegung, welche - bei der Verwendung eines einzigen Hochenergiestrahls - der Länge des linienförmigen Bestrahlungsbereichs entspricht. Beispielsweise kann das Verhältnis zwischen der Amplitude der weiteren oszillierenden Bewegung und der Amplitude der oszillierenden Bewegung zwischen ca. 1 : 3 und 1 : 10 liegen. Zusätzlich zur oszillierenden Bewegung in der zweiten Richtung erfolgt ein Vorschub in der zweiten Richtung, um den linienförmigen Bestrahlungsbereich in der zweiten Richtung über die Pulverschicht zu bewegen. Die Geschwindigkeit in der zweiten Richtung weist somit einen nicht oszillierenden, beispielsweise zeitlich konstanten Anteil sowie einen oszillierenden Anteil auf.

Bei einer Weiterbildung dieser Variante erfolgt die oszillierende Bewegung in der ersten Richtung mit einer ersten Oszillationsfrequenz und die weitere oszillierende Bewegung in der zweiten Richtung erfolgt mit einer zweiten Oszillationsfrequenz, die ein ganzzahliges Vielfaches der ersten Oszillationsfrequenz ist, wobei die zweite Oszillationsfrequenz bevorzugt mit der ersten Oszillationsfrequenz übereinstimmt. In diesem Fall wird der Hochenergiestrahl typischerweise in Form einer Spiralbewegung über die Pulverschicht geführt. Sofern die beiden Oszillationsfrequenzen übereinstimmen, weisen die beiden Oszillationsbewegungen eine konstante Phasenbeziehung bzw. eine konstante Phasenverschiebung auf. Es versteht sich aber, dass eine konstante Phasenbeziehung zwischen den beiden oszillierenden Bewegungen nicht zwingend erforderlich ist.

Bei einer weiteren Weiterbildung liegt eine Phasenverschiebung zwischen der oszillierenden Bewegung in der ersten Richtung und der weiteren oszillierenden Bewegung in der zweiten Richtung bei π / 2 (d.h. bei 90°). Weist die zusätzliche oszillierende Bewegung eine Phasenverschiebung von 90° zur oszillierenden Bewegung auf, weist bei einem Stillstand der Achse der Scannereinrichtung in der ersten Richtung (d.h. bei minimaler Geschwindigkeit) die zusätzliche oszillierende Bewegung gerade ihre maximale Geschwindigkeit auf, so dass typischerweise ein in der zweiten Richtung im Wesentlichen homogener Energieeintrag in die Pulverschicht erreicht wird, ohne dass zu diesem Zweck die Leistung des Hochenergiestrahls verändert werden muss. Eine solche Reduzierung der Leistung des Hochenergiestrahls zumindest im Bereich der Umkehrpunkte ist aber für eine zusätzliche Homogenisierung des Energieeintrags in der ersten Richtung auch in diesem Fall vorteilhaft.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine schematische Darstellung einer Bestrahlungseinrichtung mit einer Strahlformungseinrichtung, welche ein erstes einstellbares Strahlteleskop zur Veränderung der Länge eines Strahlprofils eines Laserstrahls aufweist,
- Fig. 2: eine Darstellung einer Bestrahlungseinrichtung analog Fig. 1, welche zusätzlich ein zweites einstellbares Strahlteleskop zur Veränderung der Breite des Strahlprofils aufweist,
- Fig. 3: eine Darstellung einer Bestrahlungseinrichtung analog Fig. 2, bei welcher das erste und zweite Strahlteleskop um eine Strahlachse des Laserstrahls drehbar gelagert sind, sowie
- Fig. 4: eine Darstellung einer Bearbeitungsmaschine zum Herstellen von dreidimensionalen Bauteilen, welche eine Bestrahlungseinrichtung entsprechend Fig. 1 bis Fig. 3 aufweist,
- Fig. 5: eine Darstellung einer Bearbeitungsmaschine analog zu Fig.4, die eine Bestrahlungseinrichtung mit einer Scannereinrichtung, aber ohne eine Strahlformungseinrichtung aufweist,
- Fig. 6a,b: Darstellungen einer Pulverschicht mit einem linienförmigen Bestrahlungsbereich, der durch eine oszillierende Bewegung eines Laserstrahls bzw. von drei Laserstrahlen erzeugt und entlang einer Vorschubrichtung bewegt wird,
- Fig. 7a-c: drei Darstellungen von zwei Laserstrahlen, die jeweils eine oszillierende Bewegung ausführen und die gemeinsam einen linienförmigen Bestrahlungsbereich erzeugen,
- Fig. 8a,b: zwei Darstellungen von zwei Laserstrahlen, die eine gegenläufige bzw. eine gleichsinnige oszillierende Bewegung ausführen,
- Fig. 9: Darstellungen von zwei Laserstrahlen, die eine oszillierende Bewegung mit entgegengesetztem Drehsinn ausführen,
- Fig. 10: eine Darstellung eines Laserstrahls, der in einer zickzackförmigen Bahnkurve über die Pulverschicht bewegt wird, sowie
- Fig.11a,b: zwei Darstellungen der Bewegung eines Laserstrahls, der in einer spiralförmigen Bahnkurve über die Pulverschicht bewegt wird.

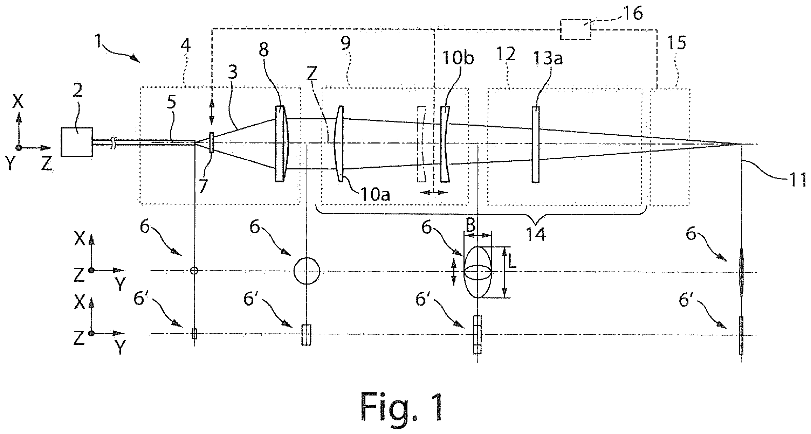

**Fig. 1** zeigt einen beispielhaften Aufbau einer Bestrahlungseinrichtung 1, welche eine Strahlquelle 2 in Form einer Laserquelle, beispielsweise in Form eines Nd:YAG-Lasers oder eines Faserlasers, zur Erzeugung eine Laserstrahls 3 aufweist. Die Bestrahlungseinrichtung 1 weist eine Kollimationseinrichtung 4 zur Kollimation des Laserstrahls 3 auf, welche eine Lichtleitfaser 5 zur Führung des Laserstrahls 3 ausgehend von der Strahlquelle 2 umfasst. An einem der Strahlquelle 2 abgewandten Ende der Lichtleitfaser 5 tritt der Laserstrahl 3 divergent aus. Die Strahlachse Z des Laserstrahls 3 entspricht bei dem in Fig. 1 gezeigten Beispiel der Z-Achse eines XYZ-Koordinatensystems.

Das Strahlprofil des Laserstrahls 3 an der Stirnseite des austrittsseitigen Endes der Lichtleitfaser 5 wird u.a. durch die Querschnittsgeometrie der Lichtleitfaser 5 bestimmt. In Fig. 1 unten ist ein Strahlprofil 6 des Laserstrahls 3 an unterschiedlichen Stellen im Strahlengang der in Fig. 1 oben dargestellten Bestrahlungseinrichtung 1 für eine Lichtleitfaser 5 mit einem kreisförmigen Querschnitt dargestellt. In Fig. 1 weiter unten ist zum Vergleich ein Strahlprofil 6' des Laserstrahls 3 bei der Verwendung einer Lichtleitfaser 5 mit einem rechteckigen Querschnitt dargestellt. Das Strahlprofil 6, 6' des Laserstrahls 3 ist jeweils in einer Ebene XY senkrecht zur Strahlachse Z des Laserstrahls 3 dargestellt. Es versteht sich, dass der Laserstrahl 3 auch ein anderes Strahlprofil aufweisen kann, beispielsweise ein Multimode-Strahlprofil oder ein Top-Hat-Strahlprofil.

Der aus der Lichtleitfaser 5 divergent austretende Laserstrahl 3 durchläuft zunächst ein optisches Element 7, welches beispielsweise als Schutzglas ausgebildet sein kann, das an einem in Fig. 1 nicht dargestellten Gehäuse der Bestrahlungseinrichtung 1 angebracht ist, und trifft nachfolgend auf eine Kollimationslinse 8, bei der es sich im gezeigten Beispiel um eine Plankonvexlinse handelt, zur Kollimation des Laserstrahls 3. Es versteht sich, dass auch eine oder mehrere andere typischer Weise sphärische Linsen, beispielsweise Bikonvexlinsen, zur Kollimation des Laserstrahls 3 verwendet werden können. Das Strahlprofil 6, 6' des Laserstrahls 3 nach der Kollimationslinse 8 entspricht dem (vergrößerten) Strahlprofil 6, 6' des Laserstrahls 3 am Austritt der Lichtleitfaser 5.

Bei dem in Fig. 1 gezeigten Beispiel weist die Bestrahlungseinrichtung 1 ein erstes Strahlteleskop 9 auf, welches eine erste Zylinderlinse 10a und eine zweite Zylinderlinse 10b umfasst, die im Strahlweg des kollimierten Laserstrahls 3 aufeinanderfolgend angeordnet sind. Die beiden Zylinderlinsen 10a, 10b des ersten Strahlteleskops 9 weisen eine Zylindersymmetrie mit einer Symmetrieachse auf, die in Y-Richtung verläuft, so dass die beiden Zylinderlinsen 10a, 10b das Strahlprofil 6, 6' des Laserstrahls 3 in X-Richtung, aber nicht in Y-Richtung beeinflussen. Die erste Zylinderlinse 10a ist plankonvex ausgebildet und erzeugt aus dem kollimiert auftreffenden Laserstrahl 3 einen in X-Richtung konvergenten Laserstrahl 3. Die erste Zylinderlinse 10a weist eine Brennweite f₁ auf, die so gewählt ist, dass die erste Zylinderlinse 10a den Laserstrahl 3 auf eine in Fig. 1 rechts dargestellte Ebene fokussiert, an der ein Bearbeitungsfeld 11 gebildet ist. Der konvergierende Laserstrahl 3 trifft nachfolgend auf die zweite, plan-konkave Zylinderlinse 10b des ersten Strahlteleskops 9, welche eine Brennweite f₂ aufweist und welche den in X-Richtung konvergenten Laserstrahl 3 geringfügig in X-Richtung aufweitet.

Die zweite Zylinderlinse 10b ist in Richtung der Strahlachse Z des Laserstrahls 3 mittels eines Antriebs verschiebbar, die in Fig. 1 durch einen Doppelpfeil angedeutet ist. Durch die Verschiebung der zweiten Zylinderlinse 10b in Richtung der Strahlachse Z kann die Länge L des Strahlprofils 6, 6' des Laserstrahls 3 in einer ersten Richtung (X-Richtung) verändert werden, wie in Fig. 1 ebenfalls durch einen Doppelpfeil angedeutet ist. Durch die vergleichsweise geringen Verfahrwege bei der Verschiebung der zweiten Zylinderlinse 10b ist sichergestellt, dass der Laserstrahl 3 stets auf dem Bearbeitungsfeld 11 fokussiert wird. Bei dem in Fig. 1 gezeigten Beispiel ist die (variable) Länge L des Strahlprofils 6, 6' entlang der ersten Richtung (X-Richtung) größer als die (konstante) Breite B des Strahlprofils 6, 6' entlang der zweiten Richtung (Y-Richtung), es versteht sich aber, dass durch Verschieben der zweiten Zylinderlinse 10b ggf. auch ein Strahlprofil 6, 6' erzeugt werden kann, bei dem die Länge L und die Breite B übereinstimmen oder dessen Länge L kleiner ist als dessen Breite B, so dass bei dem die erste Richtung (X-Richtung) und die zweite Richtung (Y-Richtung) ihre Rollen tauschen.

Bei der in Fig. 1 gezeigten Bestrahlungseinrichtung 1 ist im Strahlweg nach dem ersten Strahlteleskop 9 eine weitere Zylinderlinse 13a angeordnet, die gegenüber den beiden Zylinderlinsen 10a, 10b des ersten Strahlteleskops 9 in einer Ebene XY senkrecht zur Strahlachse Z des Laserstrahls 3 um 90° verdreht angeordnet ist. Die Zylinderachse der weiteren Zylinderlinse 13a verläuft somit in X-Richtung, weshalb die weitere Zylinderlinse 13a das Strahlprofil des Laserstrahls 3 in Y-Richtung, aber nicht in X-Richtung verändert. Die weitere Zylinderlinse 13a weist eine Brennweite f₃ auf, die so gewählt ist, dass der nach dem ersten Strahlteleskop 9 in Y-Richtung immer noch kollimierte Laserstrahl 3 auch in X-Richtung auf dem Bearbeitungsfeld 11 fokussiert wird. Eine zwischen der weiteren Zylinderlinse 13a und dem Bearbeitungsfeld 11 angeordnete Scannereinrichtung 15 dient zur Ausrichtung des Laserstrahls 3 an eine einstellbare Position in dem Bearbeitungsfeld 11, wie weiter unten näher beschrieben wird.

Die in Fig. 1 gezeigte Bestrahlungseinrichtung 1 bildet das Strahlprofil 6, 6' in einer XY-Ebene an der Stirnseite des austrittsseitigen Endes der Lichtleitfaser 5 auf die XY-Ebene ab, in der das Bearbeitungsfeld 11 gebildet ist. Das erste Strahlteleskop 9 bildet gemeinsam mit der weiteren Zylinderlinse 13a eine Strahlformungseinrichtung 14, welche es ermöglicht, durch die Verschiebung der zweiten Zylinderlinse 10b des ersten Strahlteleskops 9 die Länge L des Strahlprofils 6, 6' des Laserstrahls 3 zu verändern bzw. einzustellen. Gegebenenfalls kann bei der in Fig. 1 gezeigten Bestrahlungseinrichtung 1 auf die erste Zylinderlinse 10a verzichtet werden, d.h. der Laserstrahl 3 trifft kollimiert auf die (zweite) Zylinderlinse 10b auf. In diesem Fall bildet die Kollimationslinse 8 gemeinsam mit der (zweiten) Zylinderlinse 10b ein erstes Strahlteleskop 9. Die Breite B des Strahlprofils 6, 6' des Laserstrahls 3 lässt sich mit Hilfe der in Fig. 1 gezeigten Bestrahlungseinrichtung 1 nicht verändern.

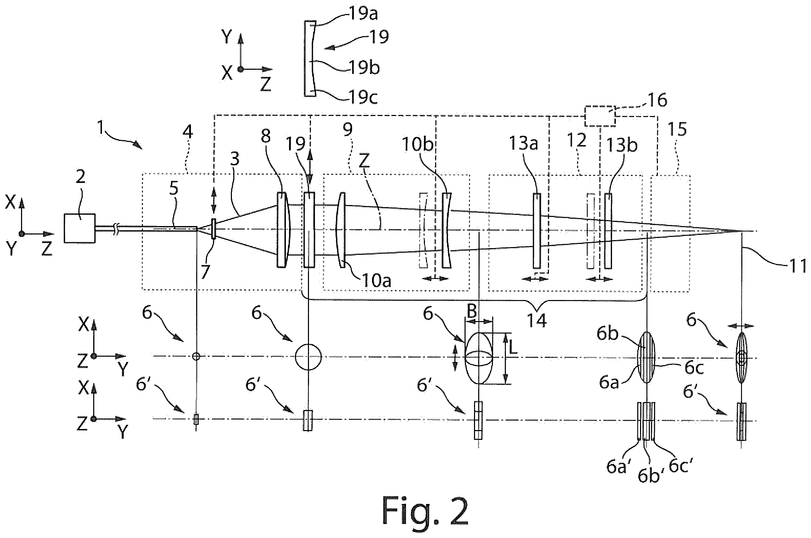

Fig. 2 zeigt eine Bestrahlungseinrichtung 1, die sich von der in Fig. 1 gezeigten Bestrahlungseinrichtung 1 dadurch unterscheidet, dass die Strahlformungseinrichtung 14 eine zweite weitere Zylinderlinse 13b aufweist, die mit der (ersten) weiteren Zylinderlinse 13a ein zweites Strahlteleskop 12 bildet. Die zweite weitere Zylinderlinse 13b weist wie die erste weitere Zylinderlinse 13a eine Zylinderachse auf, die in X-Richtung verläuft, so dass diese den Laserstrahl 3 nur in Y-Richtung, aber nicht in X-Richtung beeinflusst. Die weitere zweite Zylinderlinse 13b ist entlang der Strahlachse Z des Laserstrahls 3 mittels einer durch einen Doppelpfeil angedeuteten Antriebseinrichtung verschiebbar. Bei der ersten weiteren Zylinderlinse 13a des zweiten Strahlteleskops 12 kann es sich wie bei der ersten Zylinderlinse 10a des ersten Strahlteleskops 9 beispielsweise um eine Plankonvexlinse handeln. Bei der zweiten weiteren Zylinderlinse 13b des zweiten Strahlteleskops 12 kann es sich wie bei der zweiten Zylinderlinse 10b des ersten Strahlteleskops 9 beispielsweise um eine plan-konkave Linse handeln. Durch die Verschiebung der zweiten weiteren Zylinderlinse 13b des zweiten Strahlteleskops 12 kann die Breite B des Strahlprofils 6, 6' des Laserstrahls 3 entlang der zweiten Richtung (Y-Richtung) eingestellt werden.

Zusätzlich zur zweiten weiteren Zylinderlinse 13b des zweiten Strahlteleskops 12 kann ggf. auch die erste weitere Zylinderlinse 13a des zweiten Strahlteleskops 12 in Strahlrichtung Z des Laserstrahls 3 bewegt werden. Gegebenenfalls kann lediglich eine weitere erste Zylinderlinse 13a in der Strahlformungseinrichtung 14 vorgesehen sein, die zusammen mit der Kollimationslinse 8 ein zweites Strahlteleskop 12 bildet. Bei dem in Fig. 2 gezeigten Beispiel kann sowohl die Länge L als auch die Breite B des Strahlprofils 6, 6' verändert bzw. eingestellt werden. Insbesondere kann durch die Veränderung sowohl der Länge L als auch der Breite B ein Strahlprofil 6, 6' des Laserstrahls 3 eingestellt werden, bei dem die Länge L mit der Breite B übereinstimmt. Eine Veränderung der Orientierung des Strahlprofils in der XY-Ebene senkrecht zur Strahlachse Z ist mit der in Fig. 2 gezeigten Bestrahlungseinrichtung 1 jedoch nicht möglich.

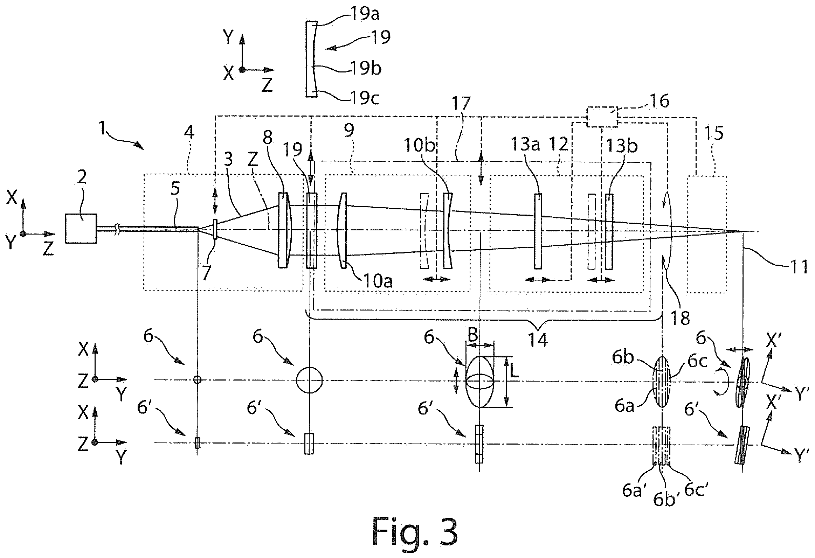

Bei der Bestrahlungseinrichtung 1, welche in **Fig. 3** gezeigt ist, ist eine solche Veränderung der Orientierung des Strahlprofils 6, 6' des Laserstrahls 3 in Form einer Drehung der ersten Richtung X und der zweiten Richtung Y senkrecht zur Strahlachse Z des Laserstrahls 3 möglich. In Fig. 3 ist unten rechts das jeweils resultierende Strahlprofil 6, 6' des Laserstrahls 3 nach der Drehung gezeigt, welches eine neue erste Richtung X' und eine neue zweite Richtung Y' aufweist, die gegenüber der ersten Richtung X und der zweiten Richtung Y vor der Strahlformungseinrichtung 14 in der XY-Ebene unter einem Winkel verlaufen, d.h. gedreht sind.

Um die Drehung des Strahlprofils 6, 6' des Laserstrahls 3 um die Strahlachse Z zu bewirken, kann die gesamte in Fig. 3 gezeigte Strahlformungseinrichtung 14 um die Strahlrichtung Z des Laserstrahls 3 gedreht werden. Zu diesem Zweck sind das erste Strahlteleskop 9 und das zweite Strahlteleskop 12 drehbar gelagert, wobei die drehbare Lagerung im gezeigten Beispiel dadurch realisiert wird, dass das erste und zweite Strahlteleskop 9, 12 auf einem gemeinsamen Halter 17 angeordnet sind, der um die Strahlachse Z drehbar gelagert ist. Die Bestrahlungseinrichtung 1 weist einen rotatorischen Antrieb 18 auf, der ausgebildet ist, den Halter 17 und somit die beiden Strahlteleskope 9, 12 um die Strahlachse Z zu drehen.

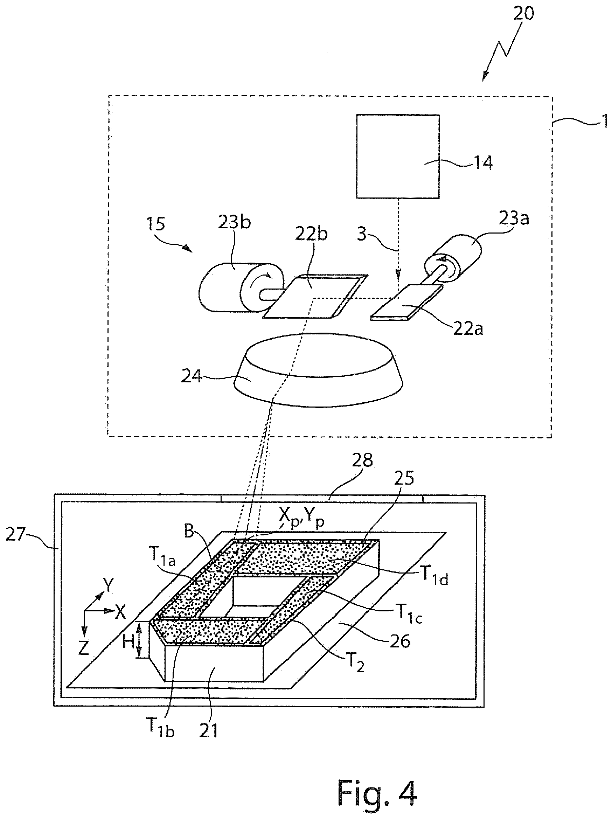

Die Ansteuerung der Antriebe für die Zylinderlinsen 10b, 13a, 13b bzw. für den rotatorischen Antrieb 18 wird von einer Steuerungseinrichtung 16 vorgenommen, die auch die Scannereinrichtung 15 ansteuert, um den Laserstrahl 3 an einer einstellbaren bzw. gewünschten Position Xp, Y_{P} (vgl. Fig. 4) auf dem Bearbeitungsfeld 11 auszurichten, wie weiter unten näher beschrieben wird. Die Steuerungseinrichtung 16 dient insbesondere dazu, die jeweiligen Antriebe für die Zylinderlinsen 10b, 13a, 13b sowie den rotatorischen Antrieb 18 in Abhängigkeit von der Position X_{P}, Y_{P} des Laserstrahls 3 in dem Bearbeitungsfeld 11 und somit die Länge L und/oder die Breite B des Strahlprofils 6, 6' sowie ggf. die Ausrichtung des Strahlprofils 6, 6' senkrecht zur Strahlrichtung Z des Laserstrahls 3 zu verändern bzw. einzustellen. Es versteht sich, dass diese Einstellung auch von der Geometrie des herzustellenden dreidimensionalen Bauteils bzw. der (virtuellen) Aufteilung des zu bestrahlenden Bereichs in Teilbereiche abhängig ist, wie weiter unten näher beschrieben wird. Es versteht sich auch, dass die Veränderung der Ausrichtung des Strahlprofils 6, 6' auch bei einer Bestrahlungseinrichtung 1 erfolgen kann, welche nur eine Veränderung der Länge L des Strahlprofils 6, 6', aber keine Veränderung der Breite B des Strahlprofils 6, 6' ermöglicht, wie dies bei der in Fig. 1 gezeigten Bestrahlungseinrichtung 1 der Fall ist.

Die in Fig. 1 bis Fig. 3 gezeigte Bestrahlungseinrichtung 1 kann in einer Bearbeitungsmaschine 20 zum Herstellen von dreidimensionalen Bauteilen 21 eingesetzt werden, welche beispielhaft in Fig. 4 dargestellt ist. Im gezeigten Beispiel weist die Scannereinrichtung 15 der Bestrahlungseinrichtung 1 einen ersten und einen zweiten Scannerspiegel 22a, 22b auf, die mittels zugehöriger Drehantriebe 23a, 23b um zwei Drehachsen drehbar sind, die beispielsweise mit der X-Richtung bzw. mit der Y-Richtung eines XYZ-Koordinatensystems übereinstimmen können. Im Strahlengang auf die Scannereinrichtung 15 folgt ein Objektiv 24, welches zusätzlich eine Fokussierung des Laserstrahls 3 vornimmt, um den von der Scannereinrichtung 15 abgelenkten Laserstrahl 3 in einem Bearbeitungsfeld 11 (vgl. Fig. 1 bis Fig. 3) zu fokussieren. Das Objektiv 24 nimmt hierbei keine Homogenisierung vor, um das Strahlprofil 6, 6' nicht zu verändern. Das Bearbeitungsfeld 11 entspricht einer XY-Ebene, in der eine in Fig. 4 gezeigte oberste Pulverschicht 25 eines auf einen Träger 26, genauer gesagt auf eine Trägerplatte, aufgebrachten Pulverbetts angeordnet ist. Der Träger 26 ist in einer Bearbeitungskammer 27 angeordnet, die ein Sichtfenster 28 für den Durchtritt des Laserstrahls 3 aufweist.

Das Objektiv 24 dient unter anderem auch dazu, den Laserstrahl 3 unabhängig von der Position X_{P}, Y_{P} auf dem Bearbeitungsfeld 11, welches bei einer geeigneten Positionierung der Bestrahlungseinrichtung 1 mit der XY-Ebene mit der in einer vorgegebenen Höhe H über dem Träger 26 angeordneten Pulverschicht 25 übereinstimmt, die Strahlachse Z des aus dem Objektiv 24 austretenden Laserstrahls 3 im Wesentlichen senkrecht zur XY-Ebene bzw. zur Pulverschicht 25 auszurichten. Es versteht sich, dass die Pulverschicht 25 anders als in Fig. 4 gezeigt ist nicht nur auf die Oberseite des bereits fertiggestellten Teils des dreidimensionalen Bauteils 21 begrenzt ist, sondern vielmehr die oberste Schicht eines Pulverbettes bildet, welches sich über die gesamte Oberseite des Trägers 26 bis zur Höhe H erstreckt.

Die Pulverschicht 25, genauer gesagt der in Fig. 4 gezeigte Bereich der Pulverschicht 25, welcher dem für das Herstellen einer zusätzlichen Schicht des dreidimensionalen Bauteils 21 bestrahlt werden soll und welcher daher mit der Geometrie des herzustellenden Bauteils 21 übereinstimmt, wird bei dem in Fig. 4 gezeigten Beispiel virtuell von der Bearbeitungsmaschine 20, beispielsweise von der Steuerungseinrichtung 16 der Bestrahlungseinrichtung 1, in vier flächenhafte erste Teilbereiche T₁ₐ, T_{1b}, T_{1c}, T_{1d} sowie in einen zweiten Teilbereich T₂ aufgeteilt, der im Wesentlichen die inneren und äußeren Konturlinien des Bauteils 21 auf der entsprechenden Höhe H sowie weitere innen liegende Konturlinien enthält, welche die ersten Teilbereiche T₁ₐ,... , T_{1d} voneinander separieren.

Die ersten Teilbereiche T₁ₐ,... , T_{1d} sind im Wesentlichen streifenförmig bzw. rechteckig ausgebildet, wobei die Länge L des Strahlprofils 6, 6' des Laserstrahls 3 in dem jeweiligen Teilbereich T₁ₐ,... , T_{1d} auf dem Bearbeitungsfeld 11 bzw. der Pulverschicht 25 nicht größer ist als die maximal mittels der Strahlformungseinrichtung 14 einstellbare Länge L. Der erste Teilbereich T₁ₐ des Bearbeitungsfelds 11 bzw. der Pulverschicht 25 wird mit einem Strahlprofil 6, 6' bestrahlt, dessen Länge L (in X-Richtung) deutlich größer ist als dessen Breite B, d.h. mit einem linienförmigen Strahlprofil 6, 6'. Die Position X_{P}, Y_{P} des Zentrums des Strahlprofils 6, 6' des Laserstrahls 3 wird hierbei entlang einer Bahnkurve B bewegt, welche in Y-Richtung in der Mitte des ersten Teilbereichs T₁ₐ verläuft. Die Länge L des Strahlprofils 6, 6' des Laserstrahls 3 verläuft senkrecht zur Richtung der Bahnkurve B (d.h. in X-Richtung) und die Länge L wird in Abhängigkeit von der Position X_{P}, Y_{P} des Laserstrahls auf dem Bearbeitungsfeld 11 dynamisch so angepasst, dass diese mit der jeweiligen Erstreckung (bzw. der Breite) des ersten Teilbereichs T₁ₐ in X-Richtung übereinstimmt. Auf diese Weise wird der erste Teilbereich T₁ₐ vollständig bestrahlt, ohne dass zu diesem Zweck eine Richtungsumkehr des Laserstrahls 3 erforderlich ist. Das linienförmige Strahlprofil 6, 6' des Laserstrahls 3 ist in dem ersten Teilbereich T₁ₐ beispielhaft an mehreren Positionen gestrichelt dargestellt.

Entsprechend wird auch der zweite Teilbereich T_{2b} mittels des Laserstrahls 3 bestrahlt, wobei im gezeigten Beispiel zwischen der Bestrahlung des ersten flächenhaften Teilbereichs T₁ₐ und der Bestrahlung des zweiten flächenhaften Teilbereiches T_{1b} die Ausrichtung des Strahlprofils 6, 6' in der XY-Ebene gedreht wird, und zwar um 90°. Auf diese Weise kann der zweite flächenhafte Teilbereich T_{1b} des Bearbeitungsfeldes 11 bzw. der Pulverschicht 25 analog zum ersten flächenhaften Teilbereich T₁ₐ bestrahlt werden, d.h. es kann die Länge L des (gedrehten) Strahlprofils 6, 6' verändert werden, während der Laserstrahl 3, genauer gesagt das Zentrum des Strahlprofils 6, 6', sich entlang einer Geraden bewegt, die in der Mitte des zweiten flächenhaften Teilbereichs T_{1b} in X-Richtung verläuft.

Entsprechend können durch eine geeignete Drehung des Strahlprofils 6, 6' auch der dritte und der vierte flächenhafte Teilbereich T_{1c}, T_{1d} bestrahlt werden. Alternativ oder zusätzlich zu einer Drehung des Strahlprofils 6, 6' können die flächenhaften Teilbereiche T₁ₐ, ..., T_{1d} auf die weiter oben beschriebene Weise bestrahlt werden, ohne dass zu diesem Zweck eine Drehung des Strahlprofils 6, 6' erfolgt. Gegebenenfalls kann in diesem Fall die Geometrie der flächenhaften Teilbereiche T₁ₐ, ..., T_{1d} geeignet angepasst werden. Beispielweise kann bei der Verwendung der in Fig. 1 gezeigten Bestrahlungseinrichtung 1, die nur eine Veränderung der Länge L des Strahlprofils 6, 6' in X-Richtung zulässt, eine Aufteilung des zu bestrahlenden Bereichs der Pulverschicht 25 in mehrere sich mit der Längsseite in Y-Richtung erstreckende flächenhafte Teilbereiche T₁ₐ, ... erfolgen, deren Breite in X-Richtung jeweils nicht größer als die maximal einstellbare Länge L des Strahlprofils 6, 6' in X-Richtung ist. Gegebenenfalls kann nicht nur die Länge L und/oder die Breite B des Strahlprofils 6, 6', sondern auch die Ausrichtung des Strahlprofils 6, 6' senkrecht zur Strahlachse Z während der Bestrahlung eines einzelnen flächenhaften Teilbereichs T₁ₐ, ..., T_{1d} eingestellt bzw. verändert werden.

Nach der Bestrahlung der flächenhaften ersten Teilbereiche T₁ₐ, ..., T_{1d} erfolgt die Bestrahlung des zweiten Teilbereichs T₂, wozu im gezeigten Beispiel das Strahlprofil 6, 6' des Laserstrahls 3 mittels der Strahlformungseinrichtung 14 so eingestellt wird, dass die Länge L und die Breite B des Strahlprofils 6, 6' übereinstimmen. Die Länge L (und entsprechend die Breite B) wird zudem mittels der Strahlformungseinrichtung 14 auf weniger als ca. 1,0 mm, bevorzugt weniger als 100 µm, insbesondere auf einige 10 µm eingestellt. Auf diese Weise kann der zweite, die Konturlinien enthaltende Teilbereich T₂ der Pulverschicht 25 mittels eines im Wesentlichen punktförmigen Laserstrahls 3 bestrahlt werden. Es versteht sich, dass die Bestrahlung des zweiten Teilbereichs T₂ alternativ auch vor der Bestrahlung der flächenhaften ersten Teilbereiche T₁ₐ, ..., T_{1d} erfolgen kann. Gegebenenfalls kann für die Bestrahlung des zweiten Teilbereichs T₂ alternativ die Strahlformungseinrichtung 14 aus dem Strahlengang des Laserstrahls 3 entfernt und beispielsweise durch eine Fokussierlinse ersetzt werden, um ein Strahlprofil 6 zu erhalten, bei dem die Länge L und die Breite B übereinstimmen. Die auf die oben beschriebene Weise entsprechend des Hülle-Kern-Verfahrens vollständig bestrahlte Pulverschicht 25 bildet eine (weitere) Schicht des dreidimensionalen Bauteils 21 aus.

Mittels einer nicht dargestellten Auftragseinrichtung, beispielsweise unter Verwendung eines Rakels, kann ein in Pulverform vorliegender Stoff, beispielsweise ein Metallpulver, aus einem Vorratsbehälter der Bearbeitungsmaschine 20 entnommen werden, um eine weitere Pulverschicht 25 auf das Pulverbett mit dem dreidimensionalen Bauteil 21 aufzubringen, welches bereits bis zur Höhe H fertiggestellt ist. Dieser Vorgang kann so lange fortgesetzt werden, bis das dreidimensionale Bauteil 21 vollständig fertiggestellt ist. In Abhängigkeit von der momentanen Fläche des Strahlprofils 6, 6' des Laserstrahls 3 in dem Bearbeitungsfeld 11 kann ggf. bei der Bestrahlung auch eine Anpassung der Leistung des Laserstrahls 3 erfolgen. Hierbei kann die Steuerungseinrichtung 16 die momentane Flächenleistung, welche von der momentanen Laserleistung und der momentanen Länge und Breite des Strahlprofils 6, 6' abhängt, mit der Vorschubgeschwindigkeit derart koppeln, dass die Volumenaufschmelzleistung konstant bzw. stabil gehalten wird und auf diese Weise einen sicherer Aufschmelzprozess bzw. ein sicherer Schweißprozess gewährleistet werden kann.

Zusätzlich zur Veränderung der Länge L und/oder der Breite B des Strahlprofils 6, 6' des Laserstrahls 3 kann eine Änderung des Strahlprofils 6, 6' erfolgen, indem das Strahlprofil 6, 6' mittels eines weiteren optischen Elements 19 verändert wird, welches wahlweise in den Strahlengang des Laserstahls 3 nach der Kollimationslinse 8 (oder ggf. an anderer Stelle) eingebracht oder aus diesem entfernt werden kann, wie dies in Fig. 2 und in Fig. 3 gezeigt ist. Es versteht sich, dass eine solche zusätzliche Veränderung des Strahlprofils 6, 6' auch bei der in Fig. 1 gezeigten Bestrahlungseinrichtung 1 erfolgen kann.

Im gezeigten Beispiel ist das weitere optische Element 19 ausgebildet, das Strahlprofil 6, 6' des Laserstrahls 3 entlang der zweiten Richtung Y, d.h. entlang seiner Breite B, in einen ersten Profilbereich 6a, 6a', einen zweiten Profilbereich 6b, 6b' und einen dritten Profilbereich 6c, 6c' aufzuteilen, die jeweils durch dazwischen liegende Profilbereiche getrennt sind, in denen das Strahlprofil 6, 6' nur eine sehr geringe Leistung aufweist, wie dies in Fig. 2 dargestellt ist. Für die Unterteilung des Strahlprofils 6, 6' ist das weitere optische Element 19 im gezeigten Beispiel als Keilplatte ausgebildet und weist zwei keilförmige Abschnitte 19a, 19c mit planen, zur Strahlachse Z unter einem Winkel angeordneten Flächen auf, die seitlich benachbart zu einem zentralen, vollständig planen Plattenbereich 19b angeordnet sind. Die Teile des Strahlprofils 6, 6', die auf die keilförmigen Abschnitte 19a, 19c treffen, werden in Y-Richtung jeweils nach außen, d.h. von der Strahlachse Z weg, abgelenkt und bilden den ersten und dritten Profilbereich 6a, 6a' bzw. 6c, 6c'. Der Teil des Strahlprofils 6, 6' weicher den planen Plattenbereich 19b durchläuft, bildet den zweiten, mittleren Profilbereich 6b, 6b' des Strahlprofils 6, 6'.

Eine solche Unterteilung des Strahlprofils 6, 6'in der zweiten Richtung (Y-Richtung) kann dazu dienen, eine Vorwärmung bzw. eine Nachwärmung des herzustellenden Bauteils 21 bzw. der Pulverschicht 25 zu erzeugen. Der Anteil der Leistung des Laserstrahls 3, der auf den ersten, zweiten bzw. dritten Profilbereich 6a, 6a'; 6b, 6b'; 6c, 6c' entfällt, ist im gezeigten Beispiel durch die Geometrie des weiteren optischen Elements 19 in Form der Keilplatte vorgegeben. Die Anteile können ggf. in geringen Grenzen dadurch verändert werden, dass die Position der Keilplatte 19 in Y-Richtung verändert wird. Alternativ zur Keilplatte 19 können für die Unterteilung des Strahlprofils beispielsweise zwei keilförmige optische Elemente in der Strahlformungseinrichtung 14 vorgesehen sein, die analog zu den keilförmigen Abschnitten 19a, 19c der Keilplatte 19 ausgebildet sind und die unabhängig voneinander in Y-Richtung verschoben werden können. Durch die unabhängige Verschiebung der keilförmigen optischen Elemente in den bzw. aus dem Strahlengang des Laserstahls 3 kann der Anteil der Leistung des Laserstrahls 3 und somit der gewünschte Energieeintrag bei der Vorwärmung bzw. bei der Nachwärmung gezielt eingestellt werden. Beispielsweise kann ein hoher Anteil, z.B. mehr als 70 %, der gesamten Leistung des Laserstrahls 3 auf den zweiten, mittleren Profilbereich 6b, 6b' entfallen, während auf den ersten und den zweiten Profilbereich jeweils ein geringer Anteil der gesamten Leistung des Laserstrahls 3 entfällt.

Das weitere optische Element 19 kann mit einem in Fig. 2 und Fig. 3 durch einen Doppelpfeil angedeuteten Antrieb in den Strahlengang des Laserstrahls 3 eingebracht bzw. aus diesem heraus gefahren werden, je nachdem, ob die zusätzliche Formung bzw. eine Aufteilung des Strahlprofils 6, 6' mittels des weiteren optischen Elements 19 gewünscht ist oder nicht. Das Ein- und Ausbringen des weiteren optischen Elements 19 kann ggf. in Abhängigkeit von der Position X_{P}, Y_{P} des Laserstrahls 3 auf dem Bearbeitungsfeld 11 erfolgen. So können beispielsweise die flächenhaften ersten Teilbereiche T₁ₐ, ..., T_{1d} mit einem in den Strahlengang eingebrachtem weiteren optischen Element 19 bestrahlt werden, wohingegen der zweite Teilbereich T₂ ohne ein in den Strahlengang des Laserstrahls 3 eingebrachtes weiteres optisches Element 19 bestrahlt werden kann.

Es versteht sich, dass bei der in Fig. 3 gezeigten Bestrahlungseinrichtung 1 ggf. eine Drehung des weiteren optischen Elements 19 gemeinsam mit dem um die Strahlachse Z drehbaren Halter 17 erfolgen kann bzw. dass das weitere optische Element 19 auf dem um die Strahlachse Z drehbaren Halter 17 positioniert sein kann. Alternativ oder zusätzlich kann zur zusätzlichen Formung, insbesondere zur Aufteilung, des Strahlprofils 6, 6' das in Fig. 1 bis Fig. 3 gezeigte optische Element 7 verwendet werden, welches im Strahlengang vor der Kollimationslinse 8 angeordnet ist, wenn dieses beispielsweise als diffraktives optisches Element ausgebildet ist. Das diffraktive optische Element 7 kann in diesem Fall wie weiter oben beschrieben mittels eines Antriebs in den Strahlengang eingebracht bzw. aus diesem heraus gefahren werden, je nachdem, ob eine zusätzliche Formung des Strahlprofils 6, 6' gewünscht ist oder nicht.

Bei der in Fig. 1 bis Fig. 4 beschriebenen Bestrahlungseinrichtung 1 kann auf die weiter oben beschriebene Weise die Herstellung eines dreidimensionalen Bauteils 21 mit einer höheren Aufbaurate erfolgen als dies bei herkömmlich zu diesem Zweck verwendeten Bearbeitungsmaschinen der Fall ist. Zudem kann die Scannereinrichtung 15 aufgrund der nicht erforderlichen Richtungsumkehr weniger dynamisch und daher kostengünstiger ausgebildet werden als bei herkömmlichen Bearbeitungsmaschinen. Gegebenenfalls kann hierbei auf die Verwendung eines Objektivs, beispielsweise des in Fig. 4 gezeigten Objektivs 24, verzichtet werden, d.h. die Fokussierung erfolgt ausschließlich vor der Scannereinrichtung 15.

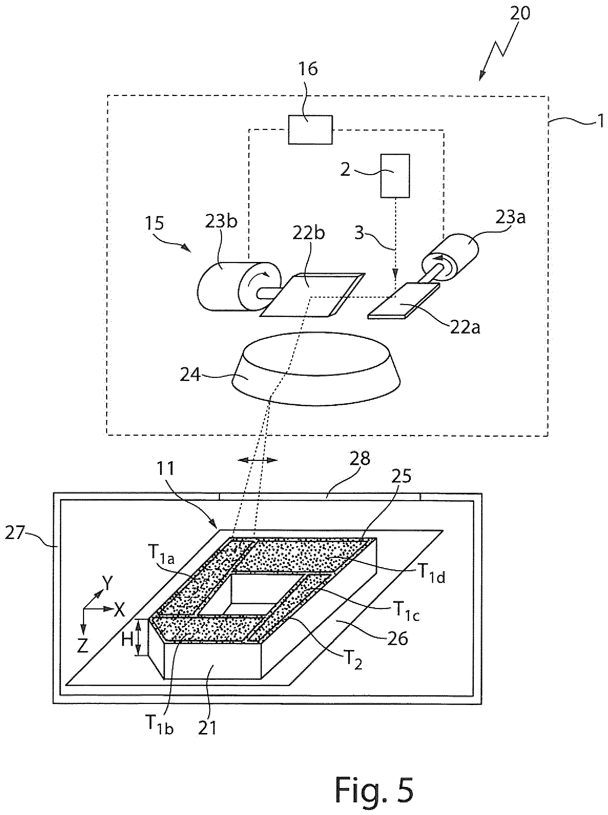

**Fig. 5** zeigt eine Bearbeitungsmaschine 20, die ebenfalls die Herstellung eines dreidimensionalen Bauteils 21 mit einer höheren Aufbaurate ermöglicht. Die Bearbeitungsmaschine 20 von Fig. 5 unterscheidet sich von der in Fig. 4 gezeigten Bearbeitungsmaschine 20 im Wesentlichen dadurch, dass die Bestrahlungseinrichtung 1 keine Strahlformungseinrichtung aufweist. Der von der Strahlquelle 2 erzeugte Laserstrahl 3 wird somit ohne eine Veränderung seines Strahlprofils und somit mit einem typischer Weise kreisförmigen bzw. runden Strahlquerschnitt bzw. "Spot" mit Hilfe der Scannereinrichtung 15 auf das Bearbeitungsfeld 11, genauer gesagt auf die oberste Pulverschicht 25, eingestrahlt.

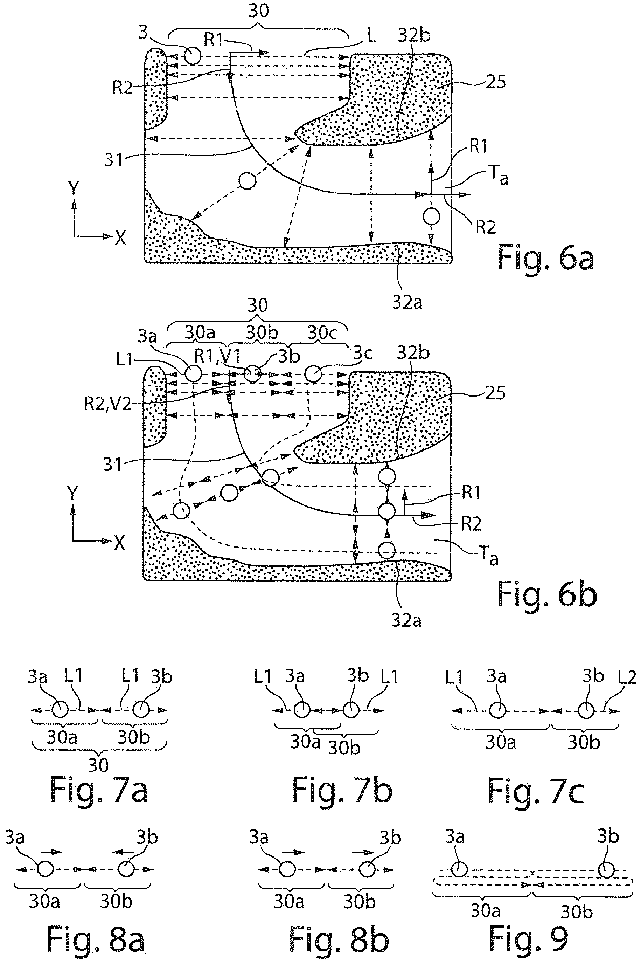

**Fig. 6a** zeigt einen Ausschnitt der obersten Pulverschicht 25 mit einem Teilbereich Tₐ einer Schicht des zu generierenden dreidimensionalen Bauteils 21 von Fig. 5 sowie mit dem Laserstrahl 3, genauer gesagt mit dessen punktförmigem Strahlprofil. Wie in Fig. 6a durch einen gestrichelten Doppelpfeil angedeutet ist, wird der Laserstrahl 3 mit einer oszillierenden Bewegung in einer ersten Richtung R1 (X-Richtung) kontinuierlich und mehrfach über die Pulverschicht 25 bewegt, wobei ein linienförmiger Bestrahlungsbereich 30 erzeugt wird, in dem die Pulverschicht 25 aufgeschmolzen wird. Der linienförmige Bestrahlungsbereich 30, der in Fig. 6a zunächst an einem oberen Ende des Teilbereichs Tₐ erzeugt wird, wird in einer zweiten, von der ersten verschiedenen Richtung R2 entlang einer in Fig. 6a angedeuteten Bahnkurve 31 über die Pulverschicht 25 bewegt, bis der Teilbereich Tₐ mit der gewünschten Geometrie vollständig aufgeschmolzen und somit der erste Teilbereich Tₐ der Schicht des dreidimensionalen Bauteils 21 vollständig hergestellt ist.

Wie in Fig. 6a zu erkennen ist, werden bei der Bewegung des linienförmigen Bestrahlungsbereichs 30 über die Pulverschicht 25 die erste Richtung R1 und die zweite Richtung R2 kontinuierlich verändert, so dass die erste Richtung R1 an dem in Fig. 6a oberen Ende des Teilbereichs Tₐ mit der X-Richtung des (ortsfesten) Bearbeitungsfeldes 11 übereinstimmt, während die erste Richtung R1 am rechten Ende des Teilbereichs Tₐ mit der Y-Richtung des Bearbeitungsfeldes 11 übereinstimmt, d.h. beide Richtungen R1, R2 werden um 90° gedreht.

Die zweite Richtung R2, d.h. die Vorschubrichtung, entspricht am oberen Ende der Pulverschicht 25 der (negativen) Y-Richtung des Bearbeitungsfeldes 11 und wird bei der Bewegung des linienförmigen Bestrahlungsbereichs 30 ebenfalls kontinuierlich um 90° gedreht, so dass die zweite Richtung R2 am rechten Ende des Teilbereichs Tₐ mit der X-Richtung des Bestrahlungsfeldes 11 übereinstimmt. Wie in Fig. 6a ebenfalls angedeutet ist, sind bei der Bewegung des linienförmigen Bestrahlungsbereichs 30 über die Pulverschicht 25 die beiden Richtungen R1, R2 nicht zwingend senkrecht zueinander ausgerichtet, vielmehr kann der Winkel, unter dem die beiden Richtungen R1, R2 zueinander in dem Bearbeitungsfeld 11 ausgerichtet sind, bei der Bewegung über die Pulverschicht 25 variieren. Dabei wird vorzugsweise die Leistung des Laserstrahls 3 während der oszillierenden Bewegung derart geregelt, dass die zu beleuchtende Fläche bzw. der Teilbereich Tₐ einen flächig konstanten Energieeintrag erfährt. In obigem Beispiel, bei dem der linienförmige Bestrahlungsbereich 30 entlang einer "Linkskurve" bewegt wird, wird die Leistung bei der Bewegung entlang der Bahnkurve 31 in positive X- und Y-Richtung gesenkt und in negative X- und Y-Richtung erhöht.

Wie in Fig. 6a ebenfalls zu erkennen ist, wird bei der Bewegung des linienförmigen Bestrahlungsbereichs 30 über die Pulverschicht 25 auch dessen Länge L entlang der vom Ort auf dem Bestrahlungsfeld 11 veränderlichen ersten Richtung R1 verändert, und zwar in Abhängigkeit von der Geometrie des herzustellenden Teilbereichs Tₐ der Schicht des dreidimensionalen Bauteils 21. Die Erzeugung des linienförmigen Bestrahlungsbereichs 30 sowie dessen Bewegung über die Pulverschicht 25 wird im gezeigten Beispiel mit Hilfe der beiden Scannerspiegel 23a, 23b der (zweidimensionalen) Scannereinrichtung 15 realisiert. Zu diesem Zweck werden die Drehantriebe 23a, 23b der beiden Scannerspiegel 22a, 22b mit Hilfe der Steuerungseinrichtung 16 geeignet angesteuert, um den Laserstrahl 3 im Bearbeitungsfeld 11 der Scannereinrichtung 15 geeignet zu positionieren. Die Drehantriebe 23a, 23b können zur Erzeugung der oszillierenden Bewegung mit einer hohen Frequenz angesteuert werden, um eine Oszillationsfrequenz von z.B. mehr als ca. 1 kHz zu erreichen.

Mit Hilfe der Drehantriebe 23a, 23b kann der Laserstrahl 3 insbesondere derart im Bearbeitungsfeld 11 bewegt werden, dass der linienförmige Bestrahlungsbereich 30 praktisch beliebig ausgerichtet bzw. gedreht werden kann und auch die (doppelte) Amplitude der oszillierenden Bewegung, d.h. die Länge L des linienförmigen Bestrahlungsbereichs 30, über einen vergleichsweise großen Wertebereich variiert werden kann, der selbstverständlich durch die Größe des Bearbeitungsfeldes 11 der Scannereinrichtung 15 begrenzt ist. Die Steuerungseinrichtung 16 greift zur Ansteuerung der Drehantriebe 23a, 23b auf Daten über die (zweidimensionale) Geometrie des zu erzeugenden dreidimensionalen Bauteils 21 an der jeweils zu bestrahlenden Pulverschicht 25 zurück, die in einer Speichereinrichtung abgelegt sind bzw. die von einem Programmiersystem vorgegeben werden.

Wie in Fig. 6a,b ebenfalls zu erkennen ist, weisen die beiden Ränder 32a,b des herzustellenden Teilbereichs Tₐ, die bei der Bewegung der beiden Enden des linienförmigen Bestrahlungsbereichs 30 entlang der in Fig. 6a,b gezeigten Bahnkurve 31 entstehen, eine hohe Glattheit auf, d.h. diese entsprechen mit einer hohen Auflösung der Soll-Kontur des Randes des herzustellenden Teilbereichs Tₐ. Die hohe Auflösung wird durch die Veränderung der Ausrichtung sowie durch die Veränderung der Länge L des linienförmigen Bestrahlungsbereichs 30 bei der Bewegung entlang der Bahnkurve 31 erreicht. Einer oder ggf. beide Ränder 32a,b des Teilbereichs Tₐ können mit einer Kontur des herzustellenden Bauteils 21 übereinstimmen. Insbesondere bei großen Bauteilen 21 stimmt/stimmen einer oder beide Ränder 32a,b des Teilbereichs Tₐ ggf. nicht mit der Kontur des Bauteils 21 überein, da sich an den jeweiligen Rand 32a,b seitlich benachbart ggf. ein weiterer herzustellender Teilbereich des Bauteils 21 anschließt.

Fig. 6b zeigt wie Fig. 6a die Herstellung des Teilbereichs Tₐ der Schicht des dreidimensionalen Bauteils 21, bei der in Fig. 6b gezeigten Darstellung werden aber im Gegensatz zu Fig. 6a nicht einer, sondern drei Laserstrahlen 3a-c verwendet, um den linienförmigen Bestrahlungsbereich 30 zu erzeugen. Jeder der drei Laserstrahlen 3a-c führt hierbei eine oszillierende Bewegung aus, die einen ersten, zweiten und dritten Abschnitt 30a-c des linienförmigen Bestrahlungsbereichs 30 bilden. Die drei Abschnitte 30a-c, die den linienförmigen Bestrahlungsbereich 30 bilden, grenzen hierbei unmittelbar aneinander an und weisen die gleiche Länge L1 (entsprechend der doppelten Amplitude der oszillierenden Bewegung) auf. Durch die Verwendung von zwei oder mehr Laserstrahlen 3a-c kann die in die Pulverschicht 25 eingebrachte Leistung gesteigert und die Aufbaurate zur Herstellung des dreidimensionalen Bauteils 21 erhöht werden.

Die drei Laserstrahlen 3a-c sind im gezeigten Beispiel unabhängig voneinander über die Pulverschicht 25 bewegbar. Um dies zu ermöglichen, kann die Scannereinrichtung 15 drei Paare von Scannerspiegeln 22a, 22b aufweisen, die jeweils als zweidimensionale Scanner dienen, um einen jeweiligen Laserstrahl 3a-c über die Pulverschicht 25 zu bewegen. Es versteht sich, dass auch zwei oder mehr als drei Laserstrahlen 3a-c auf diese Weise unabhängig voneinander über die Pulverschicht 25 bzw. über das Bearbeitungsfeld 11 bewegt werden können. Gegebenenfalls können auch diffraktive, ggf. schaltbare optische Elemente dazu verwendet werden, um zwei oder mehr Laserstrahlen 3a-c unabhängig voneinander über die Pulverschicht 25 zu bewegen.

Können zwei oder mehr Laserstrahlen 3a-c unabhängig voneinander über die Pulverschicht 25 bewegt werden, können diese wie in Fig. 6b dargestellt ist einerseits zur gemeinsamen Erzeugung eines linienförmigen Bestrahlungsbereichs 30 verwendet werden. In Abhängigkeit von der Geometrie des herzustellenden Bauteils 21 bzw. von der Geometrie eines jeweils herzustellenden Teilbereichs Tₐ der Schicht des herzustellenden Bauteils 21, entsprechend einem zu bestrahlenden Teilbereich T₁ₐ, ..., T_{1d} bzw. T₂ der Pulverschicht 25 (vgl. Fig. 5), können die zwei oder mehr Laserstrahlen 3a-c andererseits auch dazu verwendet werden, unabhängig voneinander unterschiedliche Teilbereiche T₁ₐ, ..., T_{1d} bzw. T₂ der Pulverschicht 25 (vgl. Fig. 5) zu bestrahlen, wobei z.B. bei der Erzeugung einer Konturlinie des herzustellenden Bauteils 21 der jeweilige Laserstrahl 3a-c keine oszillierende Bewegung ausführt. Die Verwendung von mehreren Laserstrahlen 3a-c erhöht somit die Flexibilität bei der Herstellung unterschiedlicher dreidimensionaler Bauteile 21 deutlich.

Der in Fig. 6b gezeigte linienförmige Bestrahlungsbereich 30 kann mit Hilfe von zwei oder mehr Laserstrahlen 3a, 3b auf unterschiedliche Weise erzeugt werden, um einen Einfluss auf die Stabilität der Schmelze im Sinne einer Schmelzbadberuhigung bzw. einen Einfluss auf die Homogenität der Schmelze zu nehmen, sowie ggf. die Aufbaurate zu steigern, indem die Länge L des linienförmigen Bestrahlungsbereichs 30 bzw. des Schmelzbades vergrößert wird. **Fig. 7a** zeigt die Erzeugung des linienförmigen Bestrahlungsbereichs 30 unter Verwendung von zwei Laserstrahlen 3a, 3b, die analog zu Fig. 6b einen jeweiligen Abschnitt 30a, 30b mit identischer Länge L1 erzeugen, indem diese jeweils eine oszillierende Bewegung ausführen. **Fig. 7b** zeigt einen Fall, bei dem sich die beiden Abschnitte 30a, 30b teilweise, und zwar in einem Bereich, der ca. 10 % der Länge L1 ausmacht, überlappen. **Fig. 7c** zeigt einen Fall, bei dem die beiden Abschnitte 30a, 30b eine unterschiedliche Länge L1, L2 aufweisen, um gemeinsam den linienförmigen Bestrahlungsbereich 30 zu bilden. Es versteht sich, dass die beiden Abschnitte 30a, 30b sich ggf. vollständig (zu 100 %) überlappen können, wobei grundsätzlich jeder Wert für den Überlapp (d.h. zwischen 0 % und 100 %) möglich ist.

**Fig. 8a**,**b** zeigen den Fall des linienförmigen Bestrahlungsbereichs von Fig. 7a, bei dem die beiden Abschnitte 30a,b sich nicht überlappen und eine identische Länge L1 aufweisen. In Fig. 8a,b weisen die beiden Abschnitte 30a,b eine konstante Phasenbeziehung auf, d.h. die oszillierende Bewegung der jeweiligen Laserstrahlen 3a, 3b erfolgt mit der gleichen Oszillationsfrequenz. Fig. 8a zeigt den Fall, bei dem die beiden Laserstrahlen 3a, 3b gegenläufig bewegt werden, Fig. 8b zeigt den Fall, bei dem die beiden Laserstrahlen 3a, 3b gleichsinnig bewegt werden. Es versteht sich, dass auch andere Phasenbeziehungen zwischen den oszillierenden Bewegungen der beiden Laserstrahlen 3a, 3b möglich sind.

**Fig. 9** zeigt schließlich den unterschiedlichen Drehsinn der oszillierenden Bewegung der beiden Laserstrahlen 3a, 3b bei der gegenläufigen Bewegung von Fig. 8a. Es versteht sich, dass bei der in Fig. 9 gewählten Darstellung die Laserstrahlen 3a, 3b wie in Fig. 8a,b dargestellt ist entlang einer gemeinsamen Linie oszillieren und dass lediglich zur Veranschaulichung des Drehsinns der oszillierenden Bewegung in Fig. 9 eine mäanderförmige Bewegung dargestellt ist. Es versteht sich ebenfalls, dass nicht zwingend eine feste Phasenbeziehung zwischen den oszillierenden Bewegungen der beiden Laserstrahlen 3a, 3b bestehen muss, sondern dass die Oszillationsfrequenzen der beiden Laserstrahlen 3a, 3b ggf. unterschiedlich gewählt werden können.

Die Frequenz der oszillierenden Bewegung des mindestens einen Laserstrahls 3, 3a-c und somit die über eine Periodendauer gemittelte Geschwindigkeit v1 in der ersten Richtung R1 (vgl. Fig. 6b), die zur Erzeugung des linienförmigen Bestrahlungsbereichs 30 verwendet wird, ist deutlich größer als die Vorschubgeschwindigkeit v2, d.h. die Geschwindigkeit in der zweiten Richtung R2. Typischer Weise ist die Geschwindigkeit v1 der oszillierenden Bewegung mindestens zehn Mal so groß, bevorzugt mindestens zwanzig Mal so groß wie die Vorschubgeschwindigkeit v2.

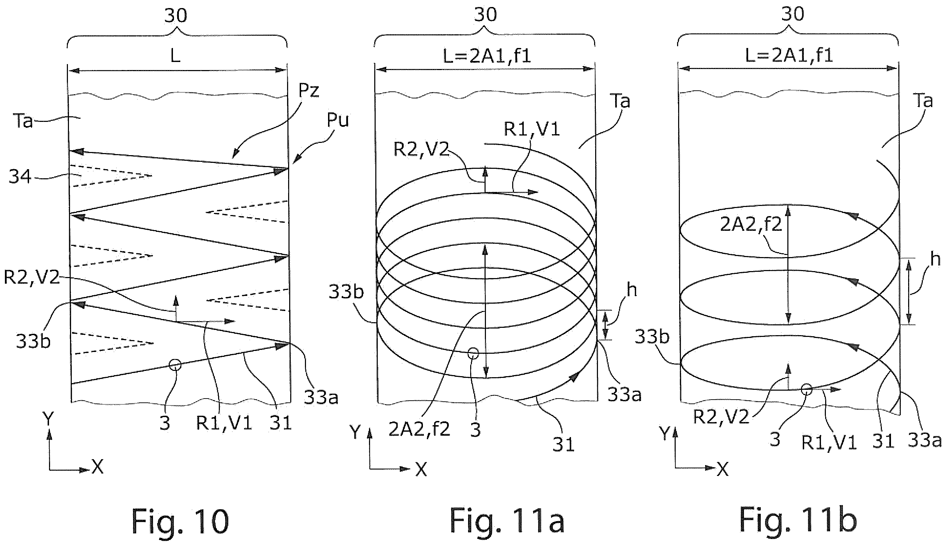

**Fig. 10** zeigt einen streifenförmigen Teilbereich Tₐ einer Schicht eines dreidimensionalen Bauteils, der mit Hilfe des Laserstrahls 3 der Bearbeitungsmaschine 20 von Fig. 5 vollständig aufgeschmolzen wird. Der sich in Y-Richtung erstreckende streifenförmige Teilbereich Tₐ weist in X-Richtung eine Breite auf, die der Länge L des linienförmigen Bestrahlungsbereichs 30 entspricht, der von dem Laserstrahl 3 bei der oszillierenden Bewegung in X-Richtung erzeugt wird. Der Laserstrahl 3 wird in der ersten Richtung R1, welche im gezeigten Beispiel der X-Richtung entspricht, in einer oszillierenden Bewegung über die (in Fig. 10 nicht dargestellte) Pulverschicht bewegt, wobei die Geschwindigkeit v1 der oszillierenden Bewegung in der ersten Richtung R1 konstant ist, d.h. die Geschwindigkeit v1 in der ersten Richtung R1 ist unabhängig von der Position des Laserstrahls 3 in X-Richtung. In der zweiten Richtung R2 (Vorschubrichtung), welche im gezeigten Beispiel der Y-Richtung entspricht, wird der Laserstrahl 3 ebenfalls mit konstanter Geschwindigkeit v2 bewegt, allerdings ohne hierbei eine oszillierende Bewegung auszuführen, so dass sich insgesamt die in Fig. 10 gezeigte zickzackförmige Bahnkurve 31 einstellt.

Da jede Position in X-Richtung mit Ausnahme der Umkehrpunkte 33a,b der oszillierenden Bewegung von dem Laserstrahl 3 zwei Mal (oder öfter) mit der gleichen Geschwindigkeit v1 (genauer gesagt mit dem gleichen Betrag der Geschwindigkeit v1) überstrichen wird, ergibt sich eine im Wesentlichen homogener Energieeintrag in der ersten Richtung R1, d.h. der Energieeintrag ist von der Position des Laserstrahls 3 in der ersten Richtung R1 im Wesentlichen unabhängig.

Da an den beiden Umkehrpunkten 33a,b der zickzackförmigen Bahnkurve 31 eine endliche Beschleunigung auftritt, verbleibt der Laserstrahl 3 länger als erwünscht an den Umkehrpunkten 33a,b, wodurch es am Rand des herzustellenden Teilbereichs Tₐ zu einer unerwünschten erhöhten Aufheizung des Pulvermaterials kommt. Um dieses Problem zu lösen, hat es sich als günstig erwiesen, die Leistung P_{U} des Laserstrahls 3 an den beiden Umkehrpunkten 33a,b der kontinuierlichen oszillierenden Bewegung gegenüber einer Leistung P_{Z} des Laserstrahls 3 zwischen den beiden Umkehrpunkten 33a,b der kontinuierlichen oszillierenden Bewegung zu reduzieren, d.h. es gilt: P_{U} < P_{z}. Die Leistung P_{Z} in den Umkehrpunkten 33a,b kann hierbei beispielsweise auf weniger als 40 %, auf weniger als 30 % oder auf weniger als 20 % der Leistung P_{Z} zwischen den Umkehrpunkten 33a,b reduziert werden. Bei der Leistung P_{Z} des Laserstrahls 3, die zwischen den Umkehrpunkten 33a,b eingestrahlt wird, kann es sich insbesondere um eine maximale Leistung handeln, die von der Strahlquelle 2 der Bearbeitungsmaschine 20 von Fig. 5 erzeugt werden kann.

Auch bei der in Fig. 10 gezeigten zickzackförmigen Bahnkurve 31, bei der ein in X-Richtung im Wesentlichen homogener Energieeintrag erreicht wird, kann es zu einem in Y-Richtung inhomogenen Energieeintrag kommen, und zwar für den Fall, dass der Laserstrahl 3 ein im Vergleich zum Vorschub pro oszillierender Bewegung vergleichsweise schmales, zu den Rändern schnell abfallendes Strahlprofil aufweist, beispielsweise in Form eines Gaußförmigen Strahlprofils. In diesem Fall kann es insbesondere an in Fig. 10 als gestrichelte Dreiecke 34 dargestellten Bereichen, die an den Rändern des linienförmigen Bestrahlungsbereichs 30 zwischen benachbarten Umkehrpunkten 33a bzw. 33b in Y-Richtung gebildet sind, zu einem reduzierten Energieeintrag kommen, während der Energieeintrag in der Mitte des Teilbereichs Tₐ wesentlich homogener ausfällt. Dies führt dazu, dass an den Umkehrpunkten 33a,b das Pulvermaterial weiter über die Schmelztemperatur erhitzt wird als notwendig, was zu einem unruhigen Herstellungsprozess führt. Dieses Problem kann durch eine höhere Oszillationsfrequenz der oszillierenden Bewegung in X-Richtung gelöst werden, die so auf die Vorschubgeschwindigkeit abgestimmt wird, dass jede Stelle innerhalb des linienförmigen Bestrahlungsbereichs 30 mindestens zwei Mal, bevorzugt mindestens drei Mal, von dem Laserstrahl 3 überstrichen wird. Die maximale Oszillationsfrequenz der oszillierenden Bewegung in X-Richtung ist jedoch durch die maximale Oszillationsfrequenz der Scannerspiegel 22a,b begrenzt.

**Fig. 11a**,**b** zeigen eine Möglichkeit, das Problem des inhomogenen Energieeintrags in Y-Richtung zu lösen, indem der kontinuierlichen oszillierenden Bewegung in der ersten Richtung R1 (X-Richtung) eine weitere kontinuierliche oszillierende Bewegung in der zweiten Richtung R2 (Y-Richtung) überlagert wird. Eine Überlagerung von zwei oszillierenden Bewegungen lässt sich mit Hilfe der beiden Scannerspiegel 22a,b auf besonders einfache Weise realisieren. Es versteht sich, dass zusätzlich zur oszillierenden Bewegung in der zweiten Richtung R2 (Y-Richtung) ein Vorschub mit einer konstanten Geschwindigkeit v2_{C} in Y-Richtung erfolgt, d.h. die Geschwindigkeit v2 in der zweiten Richtung R2 weist einen konstanten Anteil v2_{C} und einen oszillierenden Anteil v2_{O} auf (v2 = v2_{C} + v2_{O}). Der konstante Anteil v2_{C} ist erforderlich, um den linienförmigen Bestrahlungsbereich 30 in Y-Richtung über die Pulverschicht zu bewegen. Bei den in Fig. 11a,b gezeigten Beispielen entspricht die Oszillationsfrequenz f₁ der oszillierenden Bewegung in X-Richtung der Oszillationsfrequenz f₂ der oszillierenden Bewegung in Y-Richtung, was in Kombination mit dem konstanten Anteil v2_{C} der Geschwindigkeit v2 in Y-Richtung zu den in Fig. 11a,b gezeigten spiralförmigen Bahnkurven 31 führt. Die Amplitude A₁ der oszillierenden Bewegung in X-Richtung entspricht hierbei der Hälfte der Länge L des linienförmigen Bestrahlungsbereichs 30 (L = 2 A₁).

Die in Fig. 11a,b gezeigten Bahnkurven 31 unterscheiden sich durch die unterschiedliche Amplitude A₂ der oszillierenden Bewegung in Y-Richtung sowie durch eine jeweils unterschiedliche Ganghöhe h der spiralförmigen Bahnkurven 31 voneinander, die wiederum vom konstanten Anteil v2_{C} der Geschwindigkeit v2 in Y-Richtung abhängig ist. Aufgrund der gleichen Oszillationsfrequenzen f₁, f₂ weisen die beiden oszillierenden Bewegungen eine konstante Phasenverschiebung ϕ auf, die im gezeigten Beispiel bei 90° bzw. bei π / 2 liegt. Bei einer solchen Phasenverschiebung ϕ ist bei der minimalen Geschwindigkeit v1 der oszillierenden Bewegung in X-Richtung, welche im Umkehrpunkt 33a,b erreicht wird, der oszillierende Anteil v2o der Geschwindigkeit v2 der weiteren oszillierenden Bewegung in Y-Richtung maximal. Auf diese Weise kann ein besonders homogener Energieeintrag in Y-Richtung in das Pulvermaterial erfolgen.

Es versteht sich, dass bei der Darstellung von Fig. 10 der Abstand zwischen benachbarten Umkehrpunkten 33b in Y-Richtung und bei den Darstellungen in Fig. 11a,b die Amplituden A₂ der oszillierenden Bewegung in Y-Richtung zur Verdeutlichung übertrieben groß dargestellt sind. In der Regel gilt für die Amplitude A₁ der oszillierenden Bewegung in X-Richtung und die Amplitude A₂ der oszillierenden Bewegung in Y-Richtung folgende Beziehung: A₂ / A₁ > 1 : 3 und A₂ / A₁ < 1 : 10.

Die Bewegung des bzw. der Laserstrahlen 3, 3a-c zur Erzeugung des dreidimensionalen Bauteils 21 bzw. zur Erzeugung einer jeweiligen Schicht bzw. eines Teilbereichs Tₐ einer jeweiligen Schicht des Bauteils 21 wird von der Steuerungseinrichtung 16 gesteuert. Die Steuerungseinrichtung 16 kann wie in Fig. 5 gezeigt ist innerhalb der Bestrahlungseinrichtung 1 angeordnet sein, es ist aber auch möglich, dass diese außerhalb der Bestrahlungseinrichtung 1 angeordnet ist und über eine kabellose oder kabelgebundene Verbindung mit der Scannereinrichtung 15 sowie mit weiteren Komponenten der Bestrahlungseinrichtung 1 bzw. der Bearbeitungsmaschine 20 kommuniziert.

## Patentansprüche

1. Verfahren zum Herstellen mindestens eines Teilbereichs (Tₐ) einer Schicht eines dreidimensionalen Bauteils (21) durch Bestrahlen mindestens einer Pulverschicht (25) mittels mindestens eines Hochenergiestrahls, insbesondere mittels mindestens eines Laserstrahls (3, 3a-c), umfassend:
Bestrahlen der Pulverschicht (25) mittels des mindestens einen Hochenergiestrahls in einem Bearbeitungsfeld (11), **dadurch gekennzeichnet, dass** der mindestens eine Hochenergiestrahl in einer kontinuierlichen oszillierenden Bewegung in einer ersten Richtung (R1) über die Pulverschicht (25) bewegt wird, um einen linienförmigen Bestrahlungsbereich (30) zu erzeugen, in dem die Pulverschicht (25) aufgeschmolzen wird, wobei zur Erzeugung des Teilbereichs (Tₐ) der Schicht des dreidimensionalen Bauteils (21) der linienförmige Bestrahlungsbereich (30) in einer zweiten, von der ersten verschiedenen Richtung (R2) über die Pulverschicht (25) bewegt wird, und, dass die Bewegung des Hochenergiestrahls in den beiden Richtungen (R1, R2) derart aufeinander abgestimmt wird, dass jede Stelle innerhalb des linienförmigen Bestrahlungsbereichs (30) mindestens zwei Mal, bevorzugt mindestens drei Mal, von dem Hochenergiestrahl überstrichen wird.

2. Verfahren nach Anspruch 1, bei dem der Hochenergiestrahl mit Hilfe von zwei Scannerspiegeln (22a, 22b) einer Scannereinrichtung (15) in dem Bearbeitungsfeld (11) bewegt wird.

3. Verfahren nach Anspruch 1 oder 2, bei dem das dreidimensionale Bauteil (21) schichtweise durch selektives Laserschmelzen oder durch selektives Lasersintern hergestellt wird.

4. Verfahren nach einem der vorhergehenden Ansprüche, bei dem die mindestens eine Pulverschicht (25) mittels des mindestens einen Hochenergiestrahls, bevorzugt mittels des mindestens einen Laserstrahls (3), in einer Bearbeitungskammer (27) einer Bearbeitungsmaschine (20) bestrahlt wird, die zur Herstellung von dreidimensionalen Bauteilen (21) durch Bestrahlen von Pulverschichten (25) ausgebildet ist, wobei die Bearbeitungskammer (27) einen Träger (26) zum Aufbringen der Pulverschichten (25) aufweist.

5. Verfahren nach einem der vorhergehenden Ansprüche, bei dem zum Erzeugen des linienförmigen Bestrahlungsbereichs (30) mindestens zwei Hochenergiestrahlen mit einer oszillierenden Bewegung in der ersten Richtung (R1) über die Pulverschicht (25) bewegt werden.

6. Verfahren nach einem der vorhergehenden Ansprüche, bei dem die erste Richtung (R1) und/oder die zweite Richtung (R2) bei der Bewegung des linienförmigen Bestrahlungsbereichs (30) über die Pulverschicht (25) verändert werden.

7. Verfahren nach einem der vorhergehenden Ansprüche, bei dem eine Länge (L) des linienförmigen Bestrahlungsbereichs (30) in der ersten Richtung (R1) bei der Bewegung des linienförmigen Bestrahlungsbereichs (30) über die Pulverschicht (25) verändert wird.

8. Verfahren nach einem der vorhergehenden Ansprüche, bei dem eine Geschwindigkeit (v1) des Hochenergiestrahls bei der oszillierenden Bewegung in der ersten Richtung (R1) mindestens zehn Mal so groß ist als eine Geschwindigkeit (v2) des Hochenergiestrahls bei der Bewegung des linienförmigen Bestrahlungsbereichs (30) in der zweiten Richtung (R2).

9. Verfahren nach einem der vorhergehenden Ansprüche, bei dem der Hochenergiestrahl bei der kontinuierlichen oszillierenden Bewegung in der ersten Richtung (R1) mit konstanter Geschwindigkeit (v1) über die Pulverschicht (25) bewegt wird.

10. Verfahren nach einem der vorhergehenden Ansprüche, bei dem eine Leistung (P_{U}) des Hochenergiestrahls (3) an den beiden Umkehrpunkten (33a,b) der kontinuierlichen oszillierenden Bewegung gegenüber einer Leistung (P_{Z}) des Hochenergiestrahls (3) zwischen den beiden Umkehrpunkten (33a,b) der kontinuierlichen oszillierenden Bewegung reduziert wird.

11. Verfahren nach einem der vorhergehenden Ansprüche, bei dem der kontinuierlichen oszillierenden Bewegung in der ersten Richtung (R1) eine weitere kontinuierliche oszillierende Bewegung in der zweiten, von der ersten verschiedenen Richtung (R2) überlagert ist.

12. Verfahren nach Anspruch 11, bei dem die oszillierende Bewegung in der ersten Richtung (R1) mit einer ersten Oszillationsfrequenz (f₁) erfolgt und bei dem die weitere oszillierende Bewegung in der zweiten Richtung (R2) mit einer zweiten Oszillationsfrequenz (f₂) erfolgt, die ein ganzzahliges Vielfaches der ersten Oszillationsfrequenz (f₁) ist, wobei die zweite Oszillationsfrequenz (f₂) bevorzugt mit der ersten Oszillationsfrequenz (f₁) übereinstimmt.

13. Verfahren nach Anspruch 12, bei dem eine Phasenverschiebung (ϕ) zwischen der oszillierenden Bewegung in der ersten Richtung (R1) und der weiteren oszillierenden Bewegung in der zweiten Richtung (R2) bei π / 2 liegt.

## Claims

1. A method for producing at least one portion (Tₐ) of a layer of a three-dimensional component (21) by irradiating at least one powder layer (25) by means of at least one high-energy beam, in particular by means of at least one laser beam (3, 3a-c), comprising:
irradiating the powder layer (25) by means of the at least one high-energy beam in a processing field (11), **characterized in that** the at least one high-energy beam is moved in a continuous oscillating movement over the powder layer (25) in a first direction (R1) in order to produce a line-shaped irradiation region (30), in which the powder layer (25) is melted, wherein the line-shaped irradiation region (30) is moved over the powder layer (25) in a second direction (R2) that differs from the first to produce the portion (Tₐ) of the layer of the three-dimensional component (21), and that the movements of the high-energy beam in the two directions (R1, R2) are matched to one another in such a way that each point within the line-shaped irradiation region (30) is passed over at least two times, preferably at least three times, by the high-energy beam.

2. The method as claimed in claim 1, wherein the high-energy beam is moved in the processing field (11) with the aid of two scanner mirrors (22a, 22b) of a scanner device (15).

3. The method as claimed in claim 1 or 2, wherein the three-dimensional component (21) is produced layer-by-layer by selective laser melting or selective laser sintering.

4. The method as claimed in any one of the preceding claims, wherein the at least one powder layer (25) is irradiated by means of the at least one high-energy beam, preferably by means of the at least one laser beam (3), in a processing chamber (27) of a processing machine (20) which is embodied to produce three-dimensional components (21) by irradiating powder layers (25), wherein the processing chamber (27) has a carrier (26) for applying the powder layers (25).

5. The method as claimed in any one of the preceding claims, wherein at least two high-energy beams are moved over the powder layer (25) in the first direction (R1) with an oscillating movement in order to produce the line-shaped irradiation region (30).

6. The method as claimed in any one of the preceding claims, wherein the first direction (R1) and/or the second direction (R2) are changed when moving the line-shaped irradiation region (30) over the powder layer (25).

7. The method as claimed in any one of the preceding claims, wherein a length (L) of the line-shaped irradiation region (30) in the first direction (R1) is changed when moving the line-shaped irradiation region (30) over the powder layer (25).

8. The method as claimed in any one of the preceding claims, wherein a velocity (v1) of the high-energy beam during the oscillating movement in the first direction (R1) is at least ten times greater than a velocity (v2) of the high-energy beam during the movement of the line-shaped irradiation region (30) in the second direction (R2).

9. The method as claimed in any one of the preceding claims, wherein the high-energy beam is moved at a constant velocity (v1) over the powder layer (25) during the continuous oscillating movement in the first direction (R1).

10. The method as claimed in any one of the preceding claims, wherein a power (Pu) of the high-energy beam (3) at the two reversing points (33a,b) of the continuous oscillating movement is reduced in relation to a power (Pz) of the high-energy beam (3) between the two reversing points (33a,b) of the continuous oscillating movement.

11. The method as claimed in any one of the preceding claims, wherein the continuous oscillating movement in the first direction (R1) has superimposed thereon a further continuous oscillating movement in the second direction (R2) that differs from the first.

12. The method as claimed in claim 11, wherein the oscillating movement in the first direction (R1) is implemented at a first oscillation frequency (f₁) and wherein the further oscillating movement in the second direction (R2) is implemented at a second oscillation frequency (f₂), said second oscillation frequency being an integer multiple of the first oscillation frequency (f₁), wherein the second oscillation frequency (f₂) preferably corresponds to the first oscillation frequency (f₁).

13. The method as claimed in claim 12, wherein a phase shift (ϕ) between the oscillating movement in the first direction (R1) and the further oscillating movement in the second direction (R2) lies at π/2.

## Revendications

1. Procédé de fabrication d'au moins une zone partielle (Ta) d'une couche d'un élément structural tridimensionnel (21) par irradiation d'au moins une couche de poudre (25) au moyen d'au moins un rayon à haute énergie, notamment au moyen d'au moins un rayon laser (3, 3a-c), comprenant :
irradiation de la couche de poudre (25) au moyen de l'au moins un rayon à haute énergie dans un champ d'usinage (11),
**caractérisé en ce que**
l'au moins un rayon à haute énergie est déplacé dans un mouvement continuellement oscillant dans une première direction (R1) au-dessus de la couche de poudre (25) afin de générer une zone d'irradiation (30) rectiligne dans laquelle la couche de poudre (25) est fondue, en vue de générer la zone partielle (Ta) de la couche de l'élément structural tridimensionnel (21), la zone d'irradiation (30) rectiligne étant déplacée au-dessus de la couche de poudre (25) dans une deuxième direction (R2) différente de la première,
et **en ce que** le mouvement du rayon à haute énergie dans les deux directions (R1, R2) est accordé l'un sur l'autre de telle sorte que chaque point à l'intérieur de la zone d'irradiation (30) rectiligne est balayé au moins deux fois, de préférence au moins trois fois par le rayon à haute énergie.

2. Procédé selon la revendication 1, avec lequel le rayon à haute énergie est déplacé dans le champ d'usinage (11) à l'aide de deux miroirs de balayage (22a, 22b) d'un dispositif de balayage (15).

3. Procédé selon la revendication 1 ou 2, avec lequel l'élément structural tridimensionnel (21) est fabriqué couche par couche par fusion au laser sélective ou par frittage au laser sélectif.

4. Procédé selon l'une des revendications précédentes, avec lequel l'au moins une couche de poudre (25) est irradiée au moyen de l'au moins un rayon à haute énergie, de préférence au moyen de l'au moins un rayon laser (3), dans une chambre d'usinage (27) d'une machine d'usinage (20) qui est configurée pour la fabrication d'éléments structuraux tridimensionnels (21) par irradiation de couches de poudre (25), la chambre d'usinage (27) possédant un élément porteur (26) destiné à l'application des couches de poudre (25).

5. Procédé selon l'une des revendications précédentes, avec lequel, en vue de générer la zone d'irradiation (30) rectiligne, au moins deux rayons à haute énergie sont déplacés avec un mouvement oscillant dans la première direction (R1) au-dessus de la couche de poudre (25).

6. Procédé selon l'une des revendications précédentes, avec lequel la première direction (R1) et/ou la deuxième direction (R2) sont modifiées lors du mouvement de la zone d'irradiation (30) rectiligne au-dessus de la couche de poudre (25).

7. Procédé selon l'une des revendications précédentes, avec lequel une longueur (L) de la zone d'irradiation (30) rectiligne dans la première direction (R1) est modifiée lors du mouvement de la zone d'irradiation (30) rectiligne au-dessus de la couche de poudre (25).

8. Procédé selon l'une des revendications précédentes, avec lequel une vitesse (v1) du rayon à haute énergie lors du mouvement oscillant dans la première direction (R1) est au moins dix fois plus grande qu'une vitesse (v2) du rayon à haute énergie lors du mouvement de la zone d'irradiation (30) rectiligne dans la deuxième direction (R2).

9. Procédé selon l'une des revendications précédentes, avec lequel le rayon à haute énergie lors du mouvement continuellement oscillant dans la première direction (R1) est déplacé avec une vitesse (v1) constante au-dessus de la couche de poudre (25).

10. Procédé selon l'une des revendications précédentes, avec lequel une puissance (Pu) du rayon à haute énergie (3) au niveau des deux points d'inversion (33a, b) du mouvement continuellement oscillant est réduite par rapport à une puissance (Pz) du rayon à haute énergie (3) entre les deux points d'inversion (33a, b) du mouvement continuellement oscillant.

11. Procédé selon l'une des revendications précédentes, avec lequel un mouvement continuellement oscillant supplémentaire dans la deuxième direction (R2), différente de la première, est superposé au mouvement continuellement oscillant dans la première direction (R1) .

12. Procédé selon la revendication 11, avec lequel le mouvement oscillant dans la première direction (R1) s'effectue avec une première fréquence d'oscillation (f₁) et, lors du mouvement oscillant supplémentaire dans la deuxième direction (R2), avec une deuxième fréquence d'oscillation (f₂) qui est un multiple entier de la première fréquence d'oscillation (f₁), la deuxième fréquence d'oscillation (f₂) coïncidant de préférence avec la première fréquence d'oscillation (f₁).

13. Procédé selon la revendication 12, avec lequel un déphasage (ϕ) entre le mouvement oscillant dans la première direction (R1) et le mouvement oscillant supplémentaire dans la deuxième direction (R2) est de l'ordre de π/2.
